(19) Europäisches Patentamt
European Patent Office
Office européen des brevets

(11) **EP 2 110 773 B1**

(12) **EUROPEAN PATENT SPECIFICATION**

(45) Date of publication and mention of the grant of the patent:
**24.09.2014 Bulletin 2014/39**

(21) Application number: **08703510.1**

(22) Date of filing: **15.01.2008**

(51) Int Cl.:
*G06F 21/34* (2013.01)     *G06F 3/041* (2006.01)
*G06F 21/31* (2013.01)     *G06F 21/36* (2013.01)
*G06F 21/83* (2013.01)     *G07F 19/00* (2006.01)
*G06Q 20/40* (2012.01)     *G06F 3/0488* (2013.01)
*G07F 7/10* (2006.01)     *G07C 9/00* (2006.01)
*G06Q 30/06* (2012.01)

(86) International application number:
**PCT/JP2008/050660**

(87) International publication number:
**WO 2008/084886 (17.07.2008 Gazette 2008/29)**

(54) **PERSONAL IDENTIFICATION NUMBER CODE INPUT METHOD USING DOT PATTERN, PERSONAL IDENTIFICATION NUMBER CODE INPUT METHOD, AND INTERNET SHOPPING SETTLEMENT SYSTEM**

VERFAHREN ZUR EINGABE EINES ZAHLENCODES ZUR PERSÖNLICHEN IDENTIFIKATION MITHILFE EINES PUNKTMUSTERS, ZAHLENCODE ZUR PERSÖNLICHEN IDENTIFIKATION UND INTERNET-EINKAUFSABRECHNUNGSSYSTEM

PROCÉDÉ D'ENTRÉE DE CODE NIP FAISANT APPEL À UN MOTIF DE POINTS, PROCÉDÉ D'ENTRÉE DE CODE NIP ET SYSTÈME DE MISE EN PLACE D'ACHATS EN LIGNE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **12.01.2007 JP 2007005087**

(43) Date of publication of application:
**21.10.2009 Bulletin 2009/43**

(60) Divisional application:
**13167266.9 / 2 664 982**

(73) Proprietor: **Yoshida, Kenji**
**Bunkyo-ku**
**Tokyo 112-0002 (JP)**

(72) Inventor: **Yoshida, Kenji**
**Bunkyo-ku**
**Tokyo 112-0002 (JP)**

(74) Representative: **Browne, Robin Forsythe et al**
**Hepworth Browne**
**Pearl Chambers**
**22 East Parade**
**Leeds LS1 5BY (GB)**

(56) References cited:
**EP-A2- 1 934 690**     **WO-A1-2005/114546**
**JP-A- 2002 049 591**     **JP-A- 2002 109 436**
**JP-A- 2005 267 624**     **JP-A- 2005 267 624**
**US-A1- 2005 173 544**

## Description

Technical Field

The present invention relates to a method for inputting a personal identification number (PIN) code at banks and other facilities.

Back Ground Art

Recently, entering of personal authentication is increasingly necessitated, for example, when using an automated teller machine (ATM) at banks and other facilities or entering a building with a security entry system. Conventional personal authentication methods are mainly performed by means of a plastic card with a magnetic tape affixed thereon, for example, credit cards or cash cards. In the case of a cash card, a user inserts a cash card into the ATM's cash card insertion slot, then enters a four-digit PIN number consisting of numbers from 0 to 9. The user can begin a desired transaction only when a PIN number and other data, such as an account number, stored in a database of the bank match the PIN number and data sent from the ATM.

However, such a plastic card with a magnetic tape affixed is relatively easily forged. Moreover, with a four-digit PIN number, the PIN number may be detected by a third person nearby the user by observing finger movements during input operation. Therefore, the conventional methods have a flaw where security is not enough.

In view of this flaw, IC cards have been suggested. Two-dimensional codes where personal information of a card holder is recorded are printed on the surface of a card, as well as IC where biological information of the card holder is recorded is incorporated in the card, in order to prevent the card from being forged or unauthorized use (for example, Japanese patent application laid-open No. 2005-141626).

A personal authentication method using mobile phones has also been suggested, which has higher security and is safer than cards in terms of theft. In this method, personal information is registered in advance in an authentication server. A two-dimensional code generated by the authentication server is imaged by a camera equipped in a mobile terminal. The mobile terminal generates another two-dimensional code based on the imaged two-dimensional code and information set by the user in the mobile terminal. The personal authentication is complete when this two-dimensional code matches the personal information registered in the authentication server (for example, Japanese patent application laid-open No. 2006-107085).

JP2005-267624 is another earlier innovation by the Applicant. JP2005-267624 describes a dot pattern formed or printed on a surface, such as a security seal. The dot pattern encodes information and, as such, provides background to the present invention.

## DISCLOSURE OF THE INVENTION

### PROBLEMS THE INVENTION IS TO SOLVE

However, there is a problem of excessive cost and time required for a production of a card if an IC where biological information is recorded is to be implemented, as in JPA No. 2005-141626. Moreover, since the two-dimensional code occupies a certain area on the card, an aesthetic perspective of the card is deteriorated and information which can be written on the card decreases.

Also, in JPA No. 2006-107085, there is a problem that, as two-dimensional codes are generated on both the authentication server side and the mobile terminal side, transmitting and receiving processes should be performed multiple times between the authentication server and the mobile terminal, thereby making the authentication process complicated.

The present invention was created in view of such problems, and is subjected to providing a PIN code input method which is low cost and easily operative, as well as securing high security.

## MEANS FOR SECURING THE PROBLEMS

To resolve the above described problems, the present invention employs the following means.

In a first aspect of the present invention, there is provided a PIN code input method in accordance with claim 1.

According to a preferred embodiment, the plurality of symbol icons are specified and input in a predetermined order and the authentication of the authentication code is performed in consideration of the input order of the symbol icons.

According to a preferred embodiment, the orientation of the scanner is specified and input in a predetermined order and the authentication of the authentication code is performed in consideration of the input order of the orientation of the scanner.

According to a preferred embodiment, the scanner is implemented as a mobile phone camera, a remote controller equipped with a scanner, or a mouse equipped with a scanner.

In an embodiment, there is provided a PIN code input system comprising a predetermined printed surface of a card, a sticker or a mobile terminal for authentication, a scanner for reading a dot pattern printed on the printed surface, and a control device for decoding a code value read by the scanner and calling or sending an e-mail to a predetermined mobile terminal for receiving an incoming call, wherein the printed surface is printed with a number or an address of an index for referring to a number of the mobile terminal for receiving an incoming call coded as a dot pattern, wherein the control device decodes the dot pattern of the printed surface into the number of the mobile terminal for receiving an incoming call or the address by optically reading the dot pattern, calls or sends an e-mail to the mobile terminal for receiving an incoming call, and accepts PIN code input from the mobile terminal for receiving an incoming call.

In an embodiment there is provided an Internet shopping settlement system using the PIN code input system, characterized in that the control device first receives purchase information including at least an identifier (ID) which identifies a product or a service predetermined by a user, a quantity, and a price, from an Internet shopping server which is accessed by the user, performs a user authentication via the mobile terminal for receiving an incoming call, and requests to a settlement server a settlement processing.

The mobile terminal for receiving an incoming call also works as the settlement server and approves a settlement of electronic money stored in the mobile terminal for receiving an incoming call for the product or the service according to the PIN code input.

ADVANTAGE OF THE INVENTION

According to the present invention, high security PIN code input system can be provided, since, upon PIN code input, in addition to numerical values obtained from a dot pattern printed on a medium, other information such as information obtained from an orientation of a dot pattern is required.

Brief Description of the Drawings

Fig. 1 is a perspective view illustrating an ATM used for a PIN code input in the present invention.

Fig. 2 is a block diagram showing an ATM configuration.

Fig. 3 is a diagram for illustrating a card used in the present invention.

Fig. 4 is an exemplary diagram showing an example of a dot pattern.

Figs. 5A and 5B are enlarged views showing examples of information dots of a dot pattern.

Figs. 6A and 6B are exemplary diagrams showing dot pattern formats.

Fig. 7 is examples of information dots and bit expressions of data defined therein, and shows another embodiment.

Figs. 8A to 8C are examples of information dots and bit expressions of data defined therein. Fig. 8A disposes two dots; Fig. 8B disposes four dots; and Fig. 8C disposes five dots.

Figs. 9A to 9D show modification examples of dot patterns. Fig. 8A is a schematic diagram of six-information dot arrangement; Fig. 8B is a schematic diagram of nine-information dot arrangement; Fig. 8C is a schematic diagram of 12-information dot arrangement; and Fig. 8D is a schematic diagram of 36-information dot arrangement.

Fig 10 is an exemplary diagram showing an arrangement of each dot in a dot pattern.

Fig. 11 is an exemplary diagram showing a specific example of a dot pattern format.

Fig. 12 is a diagram illustrating an operation performed by a user.

Figs. 13A to 13C are exemplary diagrams showing relationships between orientations of a scanner and a dot pattern.

Fig. 14 is an exemplary diagram showing a specific example of a PIN code input method.

Figs. 15A and 15B are perspective views illustrating a touch panel chassis, which is a second embodiment of the present invention.

Fig. 16 is a diagram for illustrating a configuration of a touch panel.

Figs. 17A and 17B are exemplary diagrams showing a method for calculating a position touched by a fingertip of a user.

Figs. 18A to 18C are exemplary diagrams showing a relationship between orientations of a camera and a dot pattern.

Fig. 19 is an exemplary diagram showing a specific example of a PIN code input method.

Figs. 20A to 20C are exemplary diagrams showing inclination directions of a scanner or a card in the first embodiment or the second embodiment.

Figs. 21A to 21C are diagrams for illustrating another embodiment and illustrating a method for inputting a PIN code depending on a position clicked within a key top (a symbol icon).

Fig. 22 is a diagram for illustrating another embodiment and illustrating an embodiment characterized by differentiating clicked numbers from numerical values to be authenticated (1).

Fig. 23 is a diagram for illustrating another embodiment and illustrating an embodiment characterized by differentiating clicked numbers from numerical values to be authenticated (2).

Figs. 24A and 24B are diagrams for illustrating an example where ID + conversion table are formed on a sticker.

Fig. 25 is a diagram for illustrating another embodiment where a card for inputting a PIN code is laminated on an ATM.

Fig. 26 is a diagram for illustrating a screen displayed when inputting a PIN code.

Figs. 27A and 27B are diagrams for illustrating a method for inputting a PIN code using both a mobile phone and a card.

Fig. 28 is a diagram showing operations performed when shopping on the Internet using a card with a dot pattern for authentication.

Fig. 29 is a diagram showing how a PC and a mobile terminal are differently used in the Internet shopping.

Description of Reference Numerals and Signs

1    Dot pattern

2    Key dot

3    Reference grid point dot

4    Information dot

Embodiments of a PIN code input method of the present invention are described with reference to drawings.

(First Embodiment)

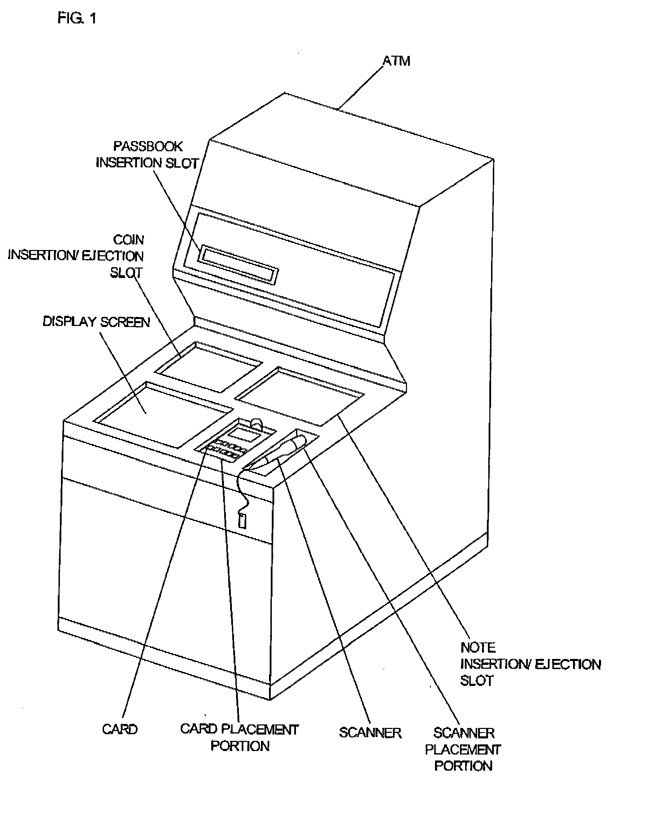

Fig. 1 is a perspective view illustrating an external appearance of an ATM of this embodiment.
As shown in Fig. 1, the ATM is equipped with a passbook insertion slot, note insertion/ejection slot, coin insertion/ejection slot, and input display unit (touch panel) which are subject units necessary for operations when users perform monetary transactions using the ATM. At right of the touch panel, a card placement portion for placing a card held by a user is provided. The card placement portion is formed recessed. A user places a card on the recessed portion and enters a PIN code. Further, a recessed scanner placement portion is provided at right of the card placement portion, and a scanner to read a dot pattern of a card is placed.

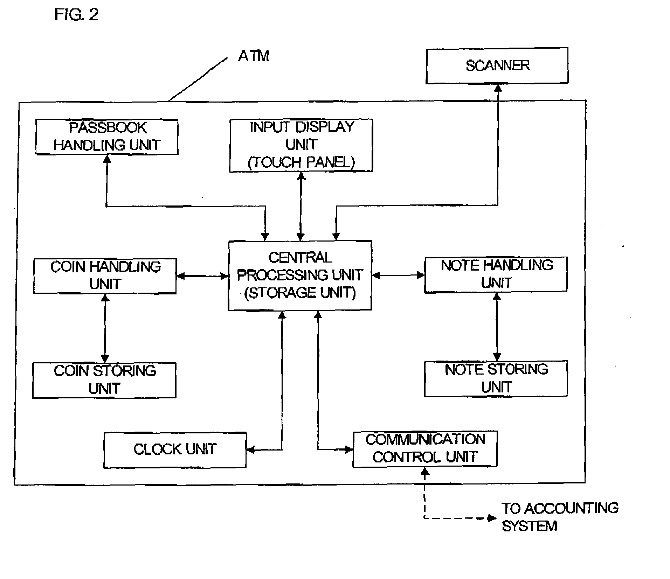

Fig. 2 is a block diagram showing a configuration of the ATM.

The ATM incorporates a central processing unit as a center, an input display unit (touch panel), a storage unit, a passbook handling unit, a note handling unit, a coin handling unit, a note storing unit, a coin storing unit, a communication control unit, and a clock unit. Further, according to a control program and all sorts of data stored in the storage unit, a control unit centrally controls these units.

The storage unit comprises a ROM (not shown) which stores a program and fixed data, a RAM (not shown) which stores variable data, and a hard disc as necessary. Various kinds of display data displayed on the touch panel are stored in the storage unit. The central processing unit, according to input operations on the touch panel by a user, retrieves necessary screen display data from the storage unit and displays on the display panel of the touch panel.

The communication control unit sends, under the control of the central processing unit, a user ID code and/or account number, etc. and a PIN code which are sent from the scanner to an accounting system where the user has an account. Then the communication control unit controls communications of sending and receiving various kinds of data of monetary transactions between the ATM and the accounting system, such as a withdrawal of cash or transferring of money.

The scanner is connected to the ATM through a USB interface.

Although the internal configuration of this scanner is not shown, the scanner incorporates an infrared irradiation unit (LED), a filter for blocking a predetermined wave length of the reflected light of the infrared irradiation, and imaging elements for imaging (CCD or CMOS). As such, the reflected light of irradiation light which irradiates a medium surface is imaged to process the dot pattern printed on the medium surface as image data.

When the central processing unit receives, via a USB interface, an input signal of a scanning code or a coordinate value converted from image data of a dot pattern on the medium surface from the scanner, the central processing unit retrieves ID information, numerical information, etc. corresponding to the input signal, and sends them to the accounting system via the communication control unit.

The code values and coordinate values being read L, the scanner will be described later.

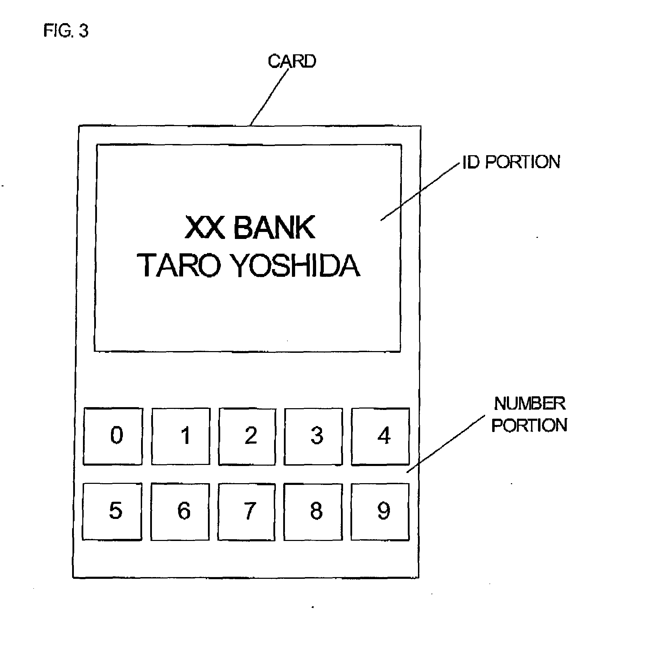

Fig. 3 is a diagram for illustrating a card held by a user.

In an upper portion of the card, an image region where a bank name and a user name are printed (hereinafter, "ID portion") is provided. In a lower portion of the card, square regions where each of numbers 0-9 is printed (hereinafter "number portion") are provided.

An ID code to identify a user is registered as a dot pattern in the ID portion. A code value of an interruption key for each of the number is registered as a dot pattern in the number portion.

The dot patterns are printed with carbon ink; image and text portions other than the dot patterns are printed with non-carbon ink.

As this carbon ink has an infrared absorbing characteristic, an image captured by the optical imaging element appears to be black at only the dot portions.

As such, as only the dot patterns are printed with carbon ink, the dot patterns can be overprinted with a normal print without visibly affecting images and texts printed with other carbon ink.

Although carbon ink is taken as an example of ink with infrared absorbing characteristic, printing of a dot pattern is not limited to carbon ink as long as the ink reacts with a specific wave length.

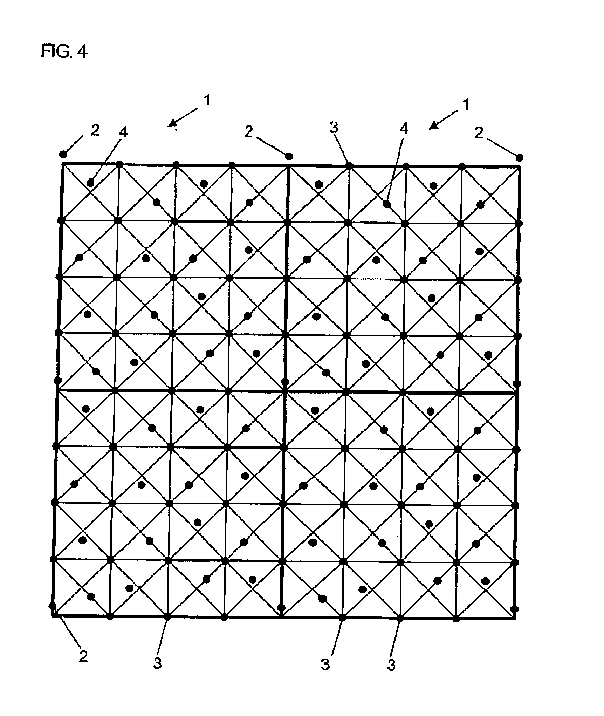

Figs. 4 to 9D illustrate such dot patterns.

Fig. 4 is an explanatory diagram showing GRID 1, an example of a dot pattern of the present invention.

In these diagrams, horizontal and vertical grid lines are added for convenience of explanation; yet do not exist on a real printed surface. Constituents of a dot pattern 1, key dots 2, information dots 3, reference grid point dots 4, and the like are preferably printed with carbon ink with an infrared absorbing characteristic or stealth ink (invisible ink), if the scanner as an imaging unit incorporates an infrared irradiation unit.

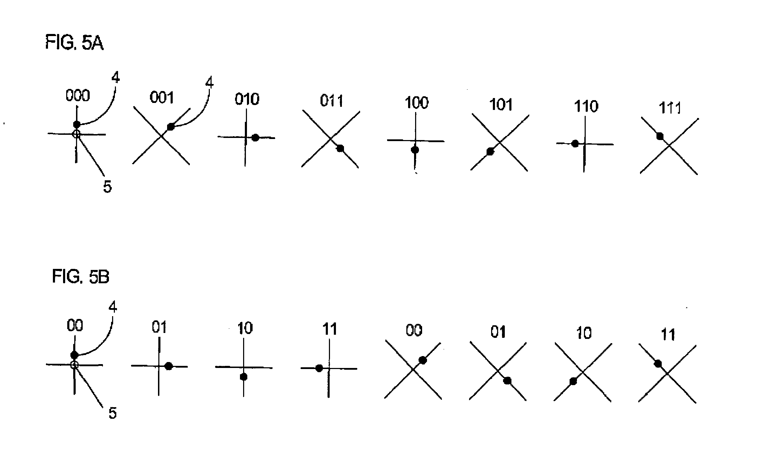

Fig. 4 is an enlarged view showing an example of arrangements of key dots 2, reference grid point dots 3, and information dots 4 of a dot pattern 1. Figs. 5A and 5B are explanatory diagrams showing information dots 4 which express vector information and their codings.

The information input and output method using a dot pattern comprises methods for generating a dot pattern 1, recognizing the dot pattern 1, analyzing the dot pattern 1, and outputting information and a program from this dot pattern 1. That is, after the dot pattern 1 is retrieved as image data by a sensor unit, reference grid point dots 3 are first extracted according to the program read by the CPU, then, key dots 2 are extracted on the basis of the fact that there is no dot arranged on the position where a reference grid point dot 3 is supposed to be and that a dot is arranged in a position shifted in a predetermined direction, whereby the dot pattern 1 of one block and the direction thereof are identified. Next, information dots 4, each of which is surrounded by four reference grid point dots 3 or key dots 2, are extracted and encoded in a predetermined algorithm. Based on the arrangements of the information dots 4 in the dot pattern 1 of one block, a predetermined code value and/or coordinate value is decoded, and information such as sounds or a program corresponding to this code value and/or coordinate value is output from an information processing device, a personal computer, a PDA, a mobile phone, or the like.

To create a dot pattern 1, based on a dot code generation algorithm, fine dots, that is, at least one key dot 2, information dot 3, and reference grid point dot 4 are arranged according to a predetermined rule for causing recognition of vector information for encoding. As shown in Fig. 4, a block of the dot pattern 1 has 5 x 5 reference grid point dots 3 and an information dot 4 in a vicinity of a virtual central point 5 surrounded by four reference grid point dots 3 or reference grid points. Arrangements and a structure of a block are determined by a key dot 2. As for this embodiment, such key dot 2 is not arranged on a reference grid point at a corner of a block, yet arranged by being shifted from the reference grid point in a predetermined direction. The key dot 2 determines the size of a block, and defines the direction of such a block, that is a dot pattern 1. Arbitrary numerical information is defined in this block. The exemplary diagram of Fig. 4 shows a state where four blocks of dot patterns 1 (enclosed in bold lines) are arranged in parallel. However, it goes without saying that the dot patterns 1 are not limited to four blocks.

A key dot 2 may be arranged anywhere in or outside a block, not being limited to a corner of a block.

When retrieving the dot pattern 1 as image data by the sensor unit, a dot code analyzing algorithm can calibrate distortions of reference grid point dots 3 attributable to a distortion of the lens of the sensor unit, imaging from an angle, expansion and contraction of a paper surface, curvature of a medium surface, and a distortion upon printing. More specifically, a calibration function for converting distorted four reference grid point dots 3 into the original square or rectangle shape $(X_n, Y_n) = f(X_n', Y_n')$ is calculated, and the same function is used to calibrate information dots 4 to obtain vector information from the correct positions of information dots 4.

An information dot 4 is a dot for causing recognition of a variety of vector information. This information dot 4 is arranged within a block of a dot pattern 1 which is configured by a key dot 2 and also at the end point of a vector expressed by having a virtual central point 5 surrounded by four reference grid point dots 3 as the starting point. For example, such information dot 4 is surrounded by four reference grid point dots 3 or reference grid points, and, since a dot apart from the virtual central point 5 has a direction and length when expressed by a vector, as shown in Fig. 5A, the information dots are arranged in eight directions by being shifted by 45 degrees in a clockwise direction, then encoded in 3 bits. Therefore, 3 bits x 16 = 48 bits can be expressed by a block of dot pattern 1.

Fig. 5B shows a method for encoding an information dot 4 in 2 bits; the dot is being shifted in a + direction and an x direction and encoded in 2 bits, thereby expressing 2 bits x 16 = 32 bits. By this method, theoretically 48 bit numerical information can be defined. However, by dividing the bits for use purposes, each 32 bits can be provided for numerical information. Depending on combinations of a + direction and an x direction, up to $2^{16}$ (approximately 65,000) arrangement patterns can be realized for information dots.

It should be noted that bit allocation is not limited to this, four bits can be expressed by disposing in 16 directions, or otherwise bit directions and encodings may be varied in a number of ways.

The diameters of a key dot 2, reference grid point dot 3, and information dot 4 are preferably approximately 0.03-0.05 mm in view of visual quality, paper properties, print accuracy, a resolution of a sensor unit, and optimal digitization.

The gap between reference grid point dots 3 is preferably approximately 0.3-0.5 mm in both horizontal and vertical directions in view of required amount of information with reference to an imaging area and possible misidentification with dots 2, 3 and 4. The displacement of a key dot 2 is preferably some 20% of the grid gap in view of possible misidentification with reference grid point dots 3 and information dots 4.

The gap between this information dot 4 and a virtual central point 5 which is surrounded by four reference grid point dots 3, is preferably approximately 15-30% of the distance between adjacent reference grid point dot 3 and virtual central point 5. If the distance between an information dot 4 and a virtual central point 5 is greater than this gap, the reference grid point dot 3 and the information dot 4 are easily seen as a large mass of dots, which degrades visual quality of a dot pattern 1. On the contrary, if the distance between an information dot 4 and a virtual central point 5 is shorter than this gap, recognition of which direction the information dot 4 which has a vector direction with reference to the virtual central point 5 is located becomes difficult.

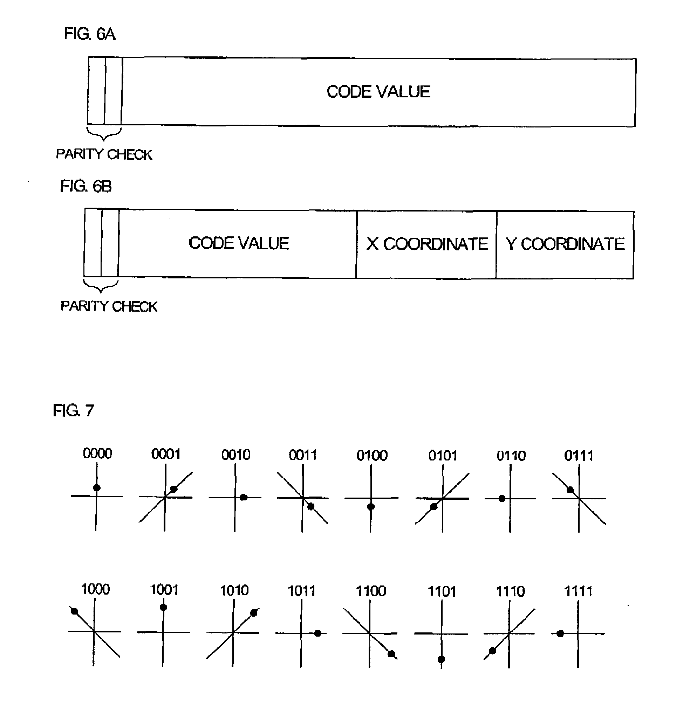

As shown in Fig. 4, one dot pattern 1 is constituted by 4 x 4 block regions. One or a plurality of information dot 4 of 2 bits is arranged in each block. Figs. 6A and 6B show dot code formats of one block of a dot pattern 1 which comprises an aggregate of such information dots 4.

As shown in Fig. 6A, one dot pattern 1 stores parity checks and a code value. In Fig. 6B, parity checks, a code value and XY coordinate values are stored. Dot code formats may be defined arbitrary.

Fig. 7 is examples showing another embodiment of information dots 4 having vector information and encodings thereof. As in these examples, if two types of information dots 4, long distance and short distance from a virtual central point 5 which is surrounded by reference grid point dots 3 or reference grid points, are used, and their vector directions are eight directions, they may be encoded in 4 bits. Here, the long distance is preferably approximately 25-30% of the distance between adjacent virtual central points 5; the short distance, approximately 15-20%. However, gap between the centers of information dots 4 of long and short distances is preferably longer than the diameter of these information dots 4.

The number of information dot 4 surrounded by four reference grid point dots 3 or reference grid points is preferably one in view of a visual quality, since if there are multiple information dots 4, adjacent dots are easily recognized as a large mass, generating a pattern. However, if the amount of information is required to be large without regard to a visual quality, one bit can be encoded for one vector to express a plurality of information dots 4 to have a large amount of information. For example, with eight concentric vectors, 0-8 information dots 4 surrounded by four reference grid point dots 3 or reference grid points can be encoded in 8 bits. With 16 vectors consisting of double 8 concentric vectors on double concentric circles, the number of information dots 4 per block is 0-16 and the information dots can be encoded in 16 bits.

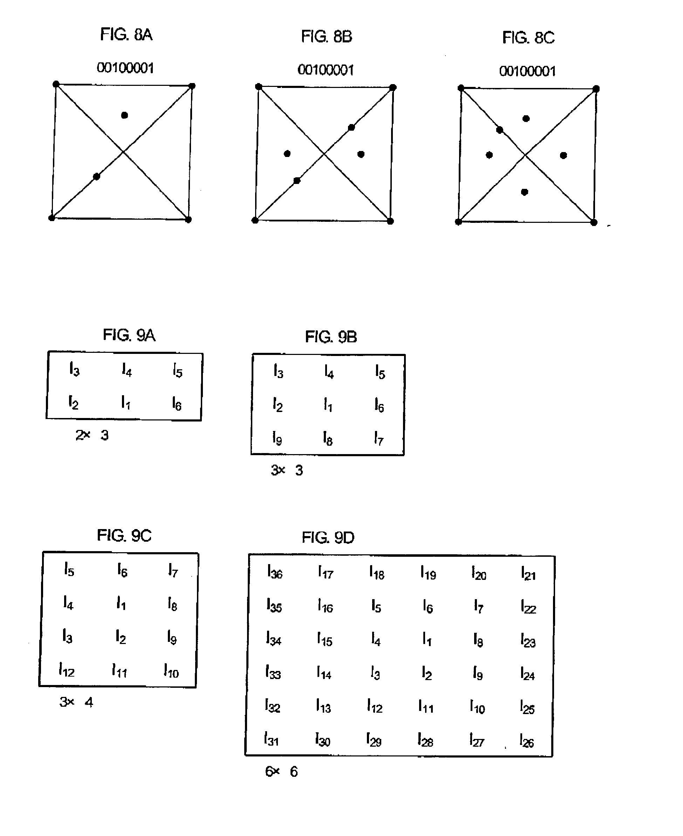

Figs. 8A to 8C are examples of information dots 4 expressed by 16 vectors consisting of double 8 concentric vectors on double concentric circles and encodings thereof. Fig. 8A shows a two-information dot 4 arrangement; Fig. 8B shows a four-information dot 4 arrangement; and Fig. 8Cshows a five-information dot 4 arrangement.

Figs. 9A to 9D show modification examples of a dot pattern 1. Fig. 9A is a schematic view of arranging six of square or rectangular regions, each constructed by four reference grid point dots 3 or reference grid points surrounding an information dot 4. Fig. 9B is a schematic view of arranging nine of the above regions. Fig. 9C is a schematic view of arranging 12 of the above regions. Fig. 9D is a schematic view of arranging 36 of the above regions.

The dot patterns 1 shown in Fig. 4 shows an example where 16 (i.e., 4x4) information dots 4 are arranged in a block. However, these information dots 4 are not limited to arranging 16 information dots in a block. The region constructed by four reference grid point dots 3 or reference grid points surrounding an information dot 4 and the encoding of an information dot 4 defined in the region may vary, as shown in Figs. 8A to 9D.

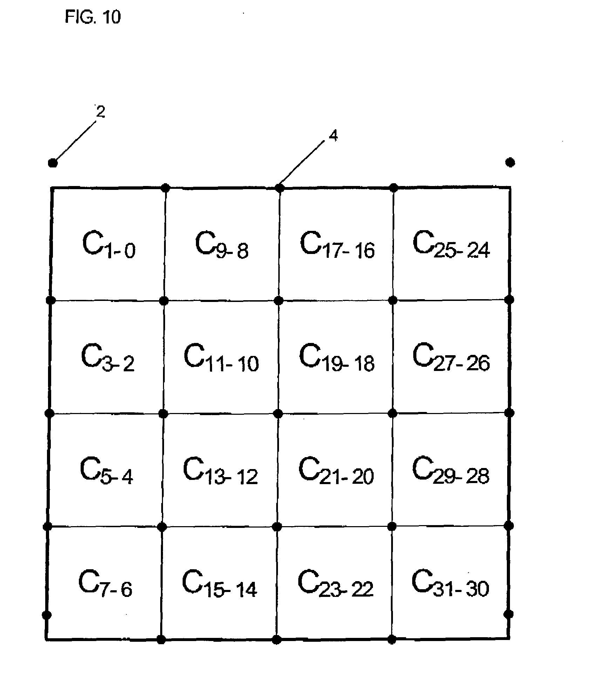

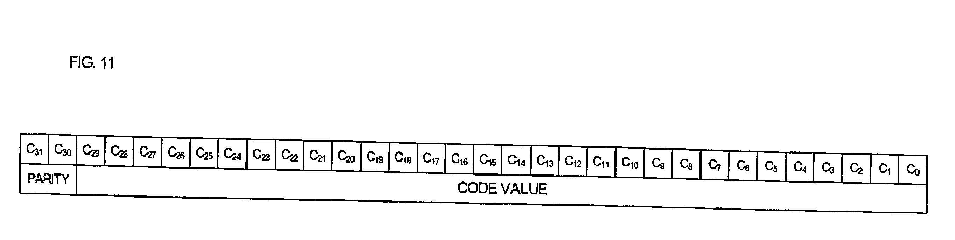

Figs. 10 and 11 are explanatory diagrams showing a relationship among a dot pattern, a code value, and an identifier.

As shown in Fig. 10, the dot pattern is a dot pattern constructed by 4 x 4 block regions. These blocks are divided into $C_{1-0}$- $C_{31-30}$. The dot code format of each region is shown in Fig. 10.

As shown in Fig. 11, $C_0$ - $C_{29}$ are code values, and $C_{30}$ - $C_{31}$ are parities.

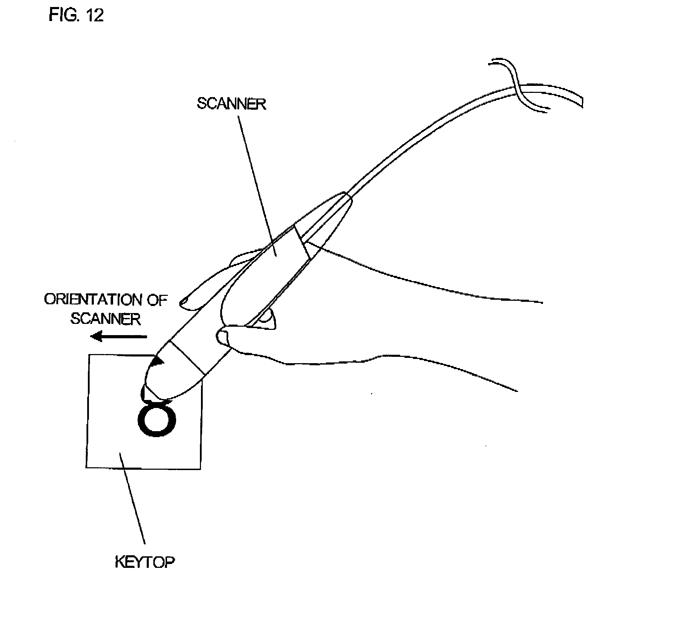

Fig. 12 is a diagram illustrating an operation performed by a user. A user uses a scanner equipped on an ATM to input a PIN code. A PIN code is set up by a combination of numerical values and orientations of the scanner. Here, an orientation of a scanner refers to a displacement of an imaging unit with reference to a vertical axis perpendicular to a paper surface as a center. When a user turns the scanner in a set direction and clicks a key top (a symbol icon) on which a numerical value set is printed (for example, "8"), the central processing unit of the scanner analyses the dot pattern read using analysis software, and converts the dot pattern to a dot code, simultaneously calculating an angle between the dot pattern read and the imaging unit. This dot code and angle information is sent to the central processing unit of the ATM. The ATM recognizes the dot code and angle information as a PIN code input. Subsequently, the ATM sends this PIN code together with a user ID code, an account number, and the like to an accounting system. The accounting system, then, determines whether to authenticate the monetary transaction after verifying the correspondence relationship.

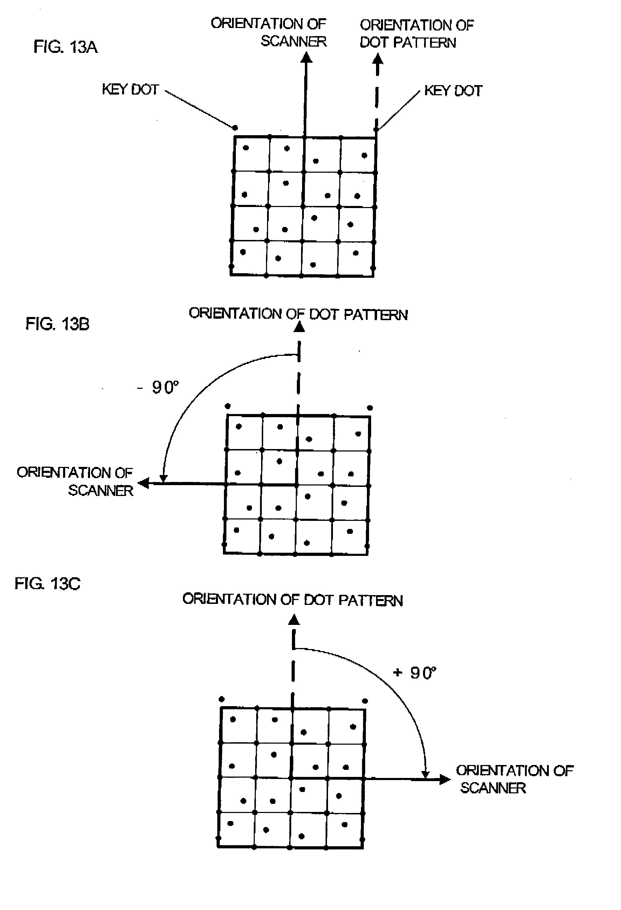

Figs 13A to 13C are diagrams illustrating a relationship between the orientations of a scanner and a dot pattern.

The orientation of a dot pattern is a direction in which a key dot is arranged. In Figs. 13A to 13C, the dot pattern faces upwards as a key dot is arranged at a location shifted upwards from a reference grid point dot.

When an image of a dot pattern is captured by an imaging unit, such as a C-MOS, in a scanner, the image data is stored in a frame buffer of the imaging unit. Here, if the location of the imaging unit is at a location rotated (shifted) with reference to a vertical axis (an imaging axis) perpendicular to a paper surface, a displacement (an angle of the scanner) with reference to the imaging axis as a center is determined based on the position relationship between the captured reference grid point dot and key dot. In Fig. 13A, the scanner is not at a location rotated with reference to the imaging axis, and the scanner angle is 0 degree. In Fig. 13B, the scanner is rotated in a direction of - 90 degrees. In Fig. 13C, the scanner is rotated in a direction of +90 degrees.

As such, even when capturing images of the same region by a scanner, a parameter of different dimension, i.e., an angle, can be added. Therefore, different meaning can be added for each angle even when reading the same region of the same location.

Thus, as described above, a PIN code can be set depending on a combination of numerical values and orientations of a scanner.

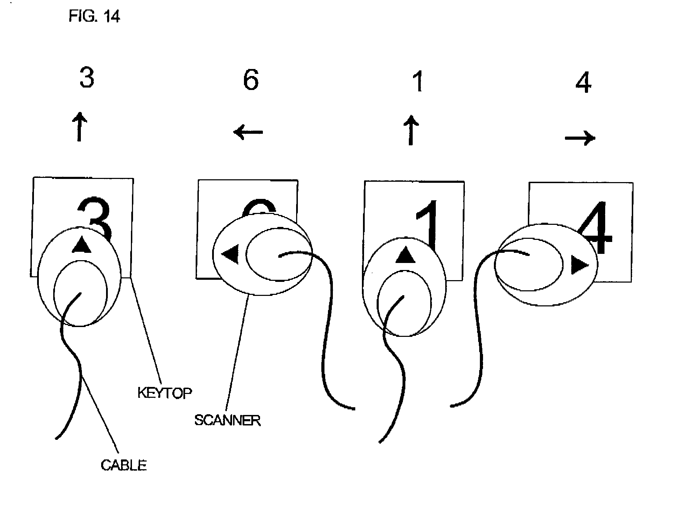

Fig. 14 is a diagram illustrating a specific example of a PIN code input method.

The PIN code input method of this embodiment is characterized by specifying and inputting, in a predetermined order, a plurality of identifiable symbol icons printed or displayed on a medium surface, recognizing a PIN code based on the order, wherein dot patterns signifying coordinate values or/and code values and orientations of the dot patterns are formed on the medium surface where the symbol icons are printed or the visual surface where the symbol icons are displayed, converting the dot pattern into a PIN code according to the coordinate values or/and code values by optically reading the dot pattern with a scanner, authenticating a PIN code in the order of the Pin code read, and inputting the orientation of the scanner with reference to the vertical axis perpendicular to the medium surface or the visual surface as a center (an angle between the scanner and the dot pattern) as a PIN code in addition to the coordinate values or/and code values signified by the dot pattern while reading the dot pattern by the scanner.

Fig. 14 is a diagram in which a scanner clicking a key top (a symbol icon) is viewed from above. The direction indicated by the black triangle is the orientation of the scanner.

It is assumed a PIN code set for a user is "3↑6←1↑4→." The user first holds the scanner upward so that the imaging unit faces an upward direction of the card, and clicks on a key top (a symbol icon) 3. Next, the user turns the scanner left and clicks a key top (a symbol icon) 6. Then, the user turns the scanner upward and clicks a key top (a symbol icon) 1. At last, the user turns the scanner right and clicks a key top (a symbol icon) 4. Accordingly, the accounting system judges the PIN code was input correctly, and begins the monetary transaction requested by the user, including depositing and withdrawing of savings. Meanwhile, even if key tops (symbol icons) are clicked in the order of "3614," if the orientation of a scanner is wrong, such as the user clicks "6" while holding the scanner upward, the accounting system does not recognize that the PIN code was correctly input, thus does not begin a monetary transaction.

If the digit number of a PIN code is great, the PIN code's security becomes higher making it robust against stealing. However, there are problems that it becomes difficult for a user to remember his/her PIN code, and takes time for a user to input. In contrary, by letting a user conduct the operation of changing the orientation of the scanner, remembering of the PIN code becomes easier for the user as the user can remember the code with physical movements. Therefore, setting a PIN code with a combination of numerical values and orientations of a scanner allows a PIN code input to be easily operable and easily rememberable for a user, as well as have high security.

It should be noted although, in this embodiment, numerical values are indicated on key tops (symbol icons), the present invention is not limited to this, and alphabets and/or drawing patterns, etc. may be printed. In such a case, code values of a dot pattern are formed to signify such alphabets or drawing patterns, etc.

(Second Embodiment)

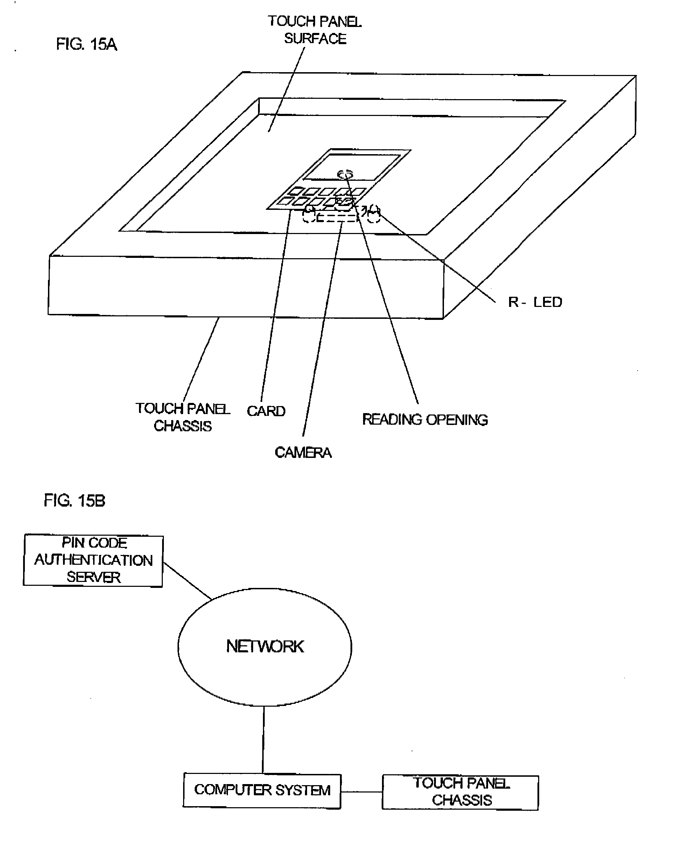

Figs. 15A and 15B are diagrams illustrating a second embodiment of the present invention.

This embodiment is for inputting a PIN code using a touch panel chassis. A card used in this embodiment is printed with a dot pattern on the back surface, and no dot pattern is printed on an ID portion or a key top (a symbol icon) portion.

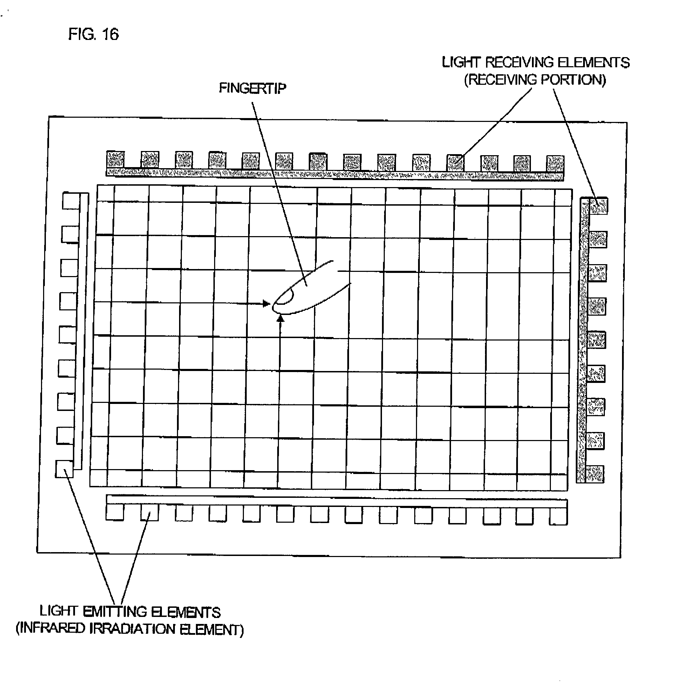

This touch panel chassis is used by connecting to a general computer system (not illustrated). The computer system is constructed with a main computer and a display. Top surface of the touch panel chassis is configured as a touch panel. The detail of such configuration is illustrated in Fig. 16. Light-emitting elements and light-receiving elements are disposed in pairs on each sidewall of the touch panel. Light from the light-emitting elements supposed to be received by the light-receiving elements cannot be received by being blocked the light with a medium such as a fingertip or a touch pen. Coordinates can be input by recognizing such a light-blocking object at such location. An imaging opening is opened at center of the top surface of the touch panel, through which a camera provided in the chassis can image the dot pattern printed on the back surface of the card placed on the upper end of the imaging opening. In the dot pattern on the back surface of the card registered an operation code and content/application code. These codes comprise coded card content information and coded card operation.

The PIN code input in the touch panel chassis is, as shown in Fig. 15B, sent to the computer system. Then, the computer system sends the PIN code to the PIN code authentication server through a network. The PIN code authentication server verifies as to whether the PIN code input match the PIN code set. Then, the PIN code authentication server sends the results to the computer system through the network.

It should be noted that the PIN code authentication unit may be incorporated in the main computer.

IRLEDs as lighting units are disposed in the vicinity of the camera in the touch panel chassis and can irradiate the imaging opening. That is, by imaging infrared light irradiated by the IRLEDs and reflected by the back surface of the card placed on the imaging opening, the dot pattern on the back surface of the card can be imaged.

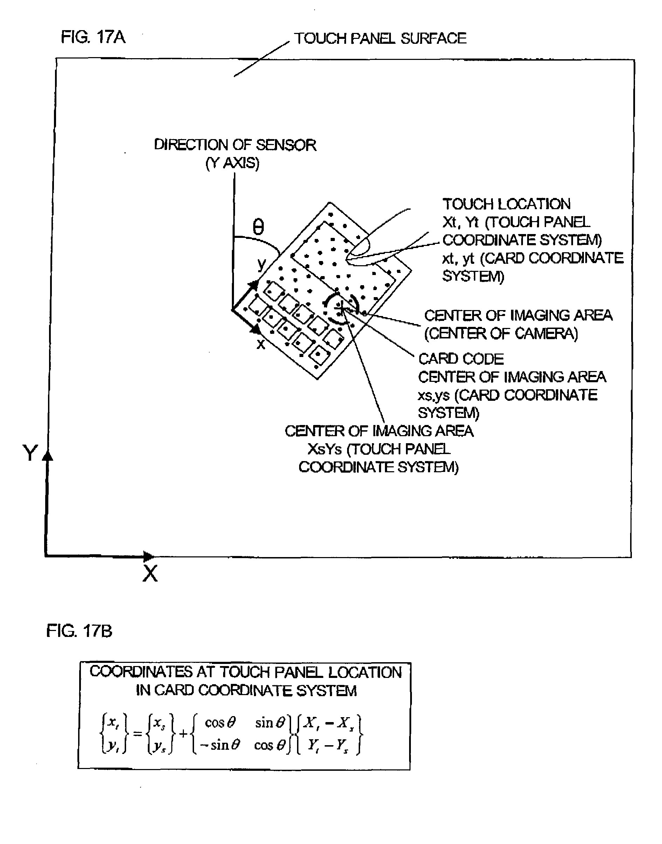

Figs. 17A and 17B are diagrams illustrating a calculation method of a location touched by a fingertip of an operator/player (touch location).

In a touch panel (a coordinate recognition unit) coordinate system, the coordinates at center of the camera (an imaging unit) is assumed $(X_s, Y_s)$.

Also, the location of the center of the imaging area imaged by the camera expressed in the card coordinate system is assumed $(x_s, y_s)$.

At the same time, an angle between a Y direction in the touch panel coordinate system and a y direction in the card coordinate system is assumed $\theta$.

In this case, a touch location of a fingertip of an operator/player is assumed $(X_t, Y_t)$ as expressed by the touch panel coordinate system.

In this case, the touch location in the card coordinate system is expressed by the following equation.

$$\left\{ \begin{matrix} x_t \\ y_t \end{matrix} \right\} = \left\{ \begin{matrix} x_s \\ y_s \end{matrix} \right\} + \left\{ \begin{matrix} \cos\theta & \sin\theta \\ -\sin\theta & \cos\theta \end{matrix} \right\} \left\{ \begin{matrix} X_t - X_s \\ Y_t - Y_s \end{matrix} \right\}$$

With such calculation, it is recognizable as to which part of the print on the card surface is touched by a fingertip no matter which orientation the card may be placed on the touch panel surface.

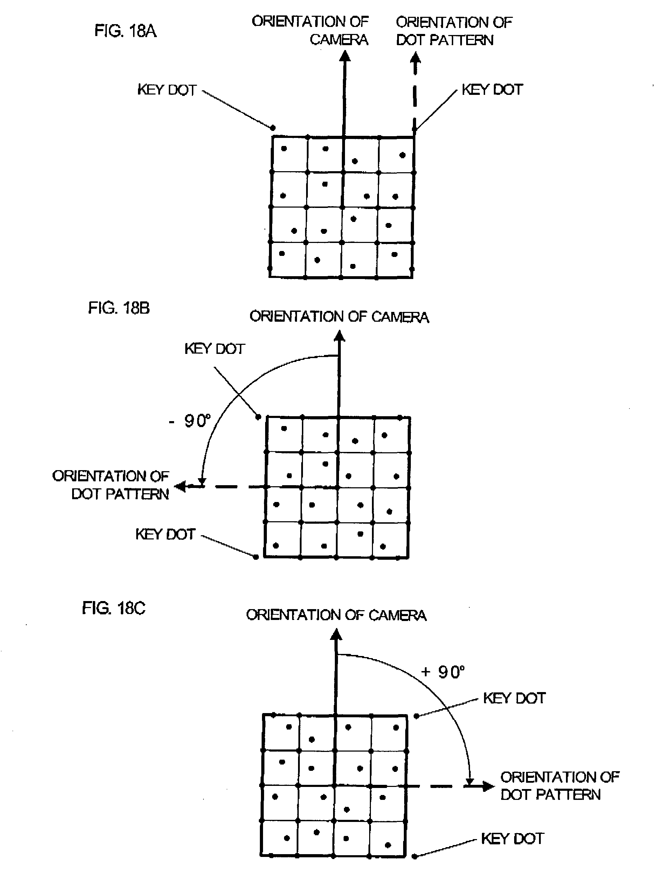

Figs. 18A to 18C are diagrams illustrating the relationship between the orientations of a camera and a dot pattern.

Fig. 18A shows a state where the dot pattern is placed in the same orientation as that of the imaging unit (a camera) in the touch panel chassis. Fig. 18B is a diagram showing a state where the dot pattern is placed by being rotated in the direction of -90 degrees. Fig. 18C is a diagram showing a state where the dot pattern is placed by being rotated in the direction of +90 degrees.

As such, when placing a card on the touch panel surface, by placing a card in a predetermined angle with reference to a vertical axis, as a center of rotation axis, perpendicular to the card surface, dot pattern to be read can further have different meaning.

Thus, a PIN code can be set with a combination of numerical values and orientations of the scanner.

Therefore, in this embodiment, when a user changes the orientation of the card on the touch panel surface, the central processing unit in the personal computer recognizes the orientation of the dot pattern as well as the code value of the dot pattern, and sends the information to the PIN code authentication server via a network. The PIN code authentication server judges that the PIN code was correctly input only when both the numerical values touched and the orientations of the dot pattern match the set PIN code.

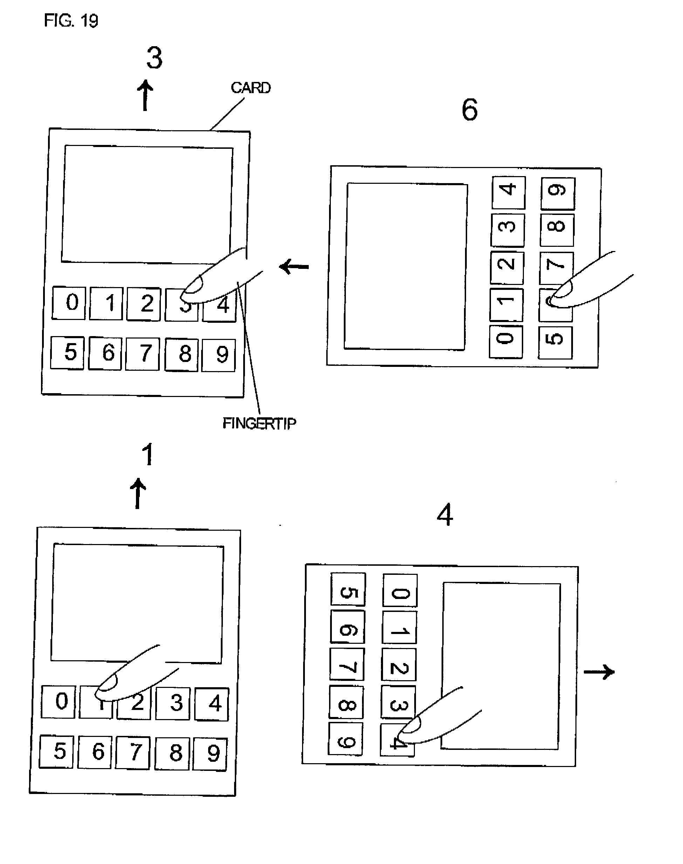

Fig. 19 is a diagram illustrating a specific example of the PIN code input method.

A PIN code set for a user is assumed "3↑6←1↑4→." The user first places a card upward on the touch panel surface, and touches a key top (a symbol icon) 3. Next, the user changes the orientation of the card leftward, then touches a key top (a symbol icon) 6. Next, the user changes the orientation of the card upward and touches a key top (a symbol icon) 1. At last, the user changes the orientation of the card rightward and touches a key top (a symbol icon) 4. Accordingly, the PIN code authentication server judges that the PIN code was input correctly and starts a transaction for authentication. In contrast, even if the key tops (symbol icons) are all touched in the order of "3614," for example, if orientations of the card are wrong, such as "6" is touched with the orientation of the card upward, the PIN code authentication server does not judge the PIN code was input correctly and does not begin an transaction for authentication.

It should be noted that, although, in this embodiment, numerical values are indicated on the key tops (symbol icons), the invention is not limited to this. Alphabets, drawing patterns or the like may also be printed. In such a case, a code value of a dot pattern is formed to signify such an alphabet or a drawing pattern.

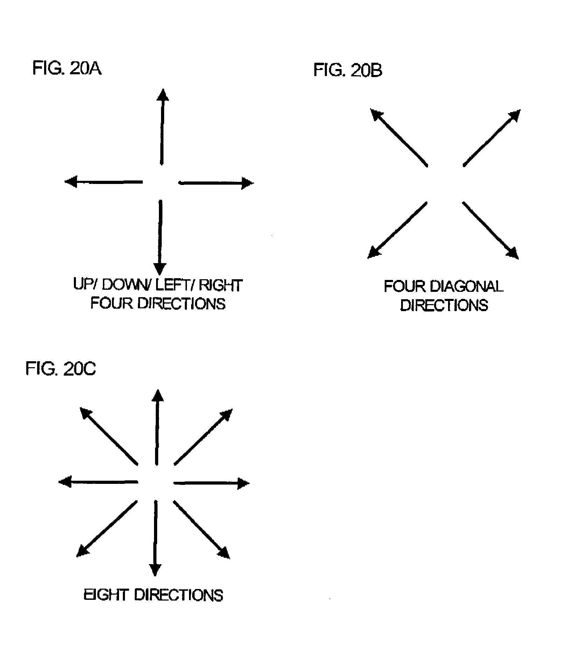

Figs. 20A to 20C are diagrams illustrating rotation directions of the scanner in the first embodiment and rotation directions of the card in the second embodiment. Fig. 14 and Fig. 19 use, as shown in Fig. 20A, rotations in horizontal and vertical four directions as parameters. However, the present invention is not limited to this, rotations in four diagonal directions as shown in Fig. 20B may also be parameters, or as shown in Fig. 20C, eight directions of four horizontal and vertical directions and four diagonal directions may be parameters.

(Other Embodiments)

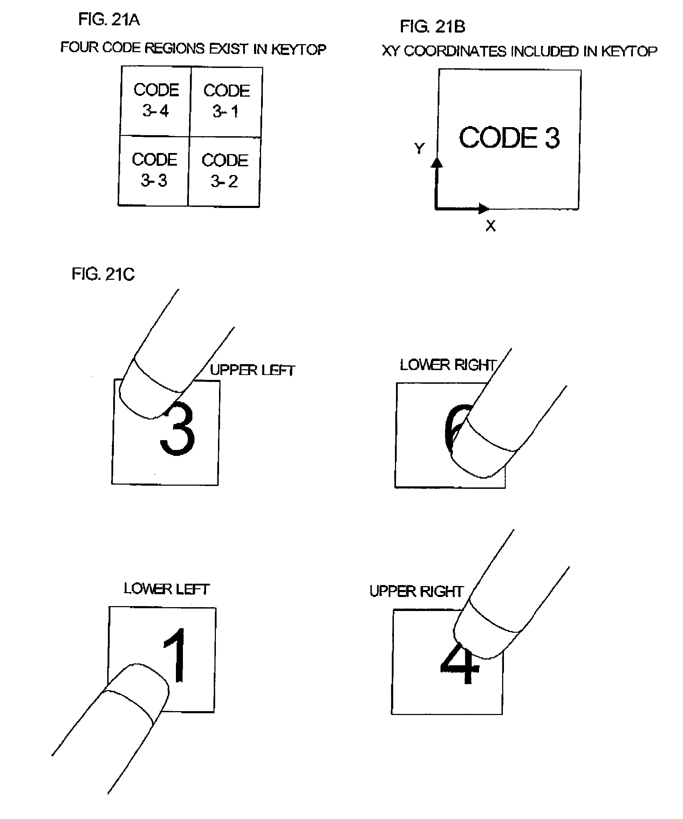

Fig. 21A shows, in a card shown in Fig. 3, a plurality of code regions exist within a key top (a symbol icon) of a card.

In this embodiment, four different codes exist within a key top (a symbol icon) "3." Thus, upper right of the key top (symbol icon) is CODE 3-1; lower right, CODE 3-2; lower left, CODE 3-3; and upper left, CODE 3-4. As such, depending on the location where a user clicks on the key top (symbol icon), different meaning can be obtained.

Fig. 21B includes X and Y coordinates in a dot pattern on a key top (a symbol icon).

In this embodiment, a code value signifying that the key top (symbol icon) is 3 and a coordinate value signifying a key top (symbol icon) coordinate system are included within a dot pattern. As such, depending on a location where a user clicks on a key top (a symbol icon), different meaning can be obtained. Thus, a click location can be an element of a PIN code.

Fig. 21C is a diagram illustrating a specific example of a PIN code input method.

In embodiments of Figs. 21A and 21B, a PIN code is set based on a combination of numerical values and touch directions on key tops (symbol icons). Touch directions are four directions: upper right, lower right, lower left, and upper left. For example, it is assumed that set PIN code is "upper left 3, lower right 6, lower left 4, and upper right 4." A user, first, clicks an upper left portion of the key top (symbol icon) 3 with a scanner. Next, the user clicks a lower right portion of the key top (symbol icon) 6, then, a lower left portion of the key top (symbol icon) 4, and finally, an upper right portion of the key top (symbol icon) 4. As a result, the accounting system judges that the PIN code was input correctly, and begins a monetary transaction. On the other hand, even if key tops (symbol icons) are touched in an order of "3614," if the user touches a wrong position, such as the upper left portion of "6," the accounting system does not judge that the PIN code was input correctly and does not start a monetary transaction.

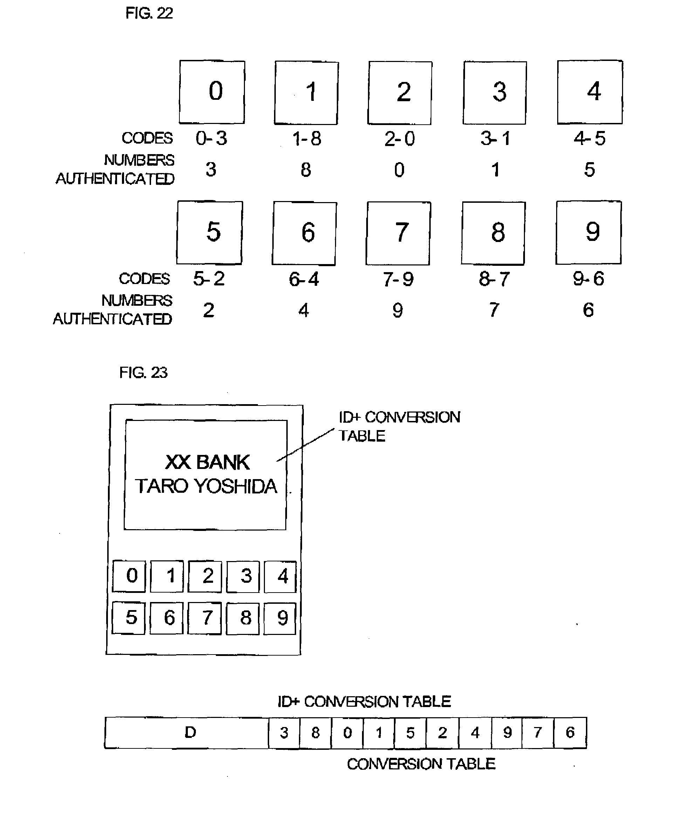

Fig. 22 shows an embodiment where a dot code overprinted with a numerical value is different for each card held by individuals. This embodiment features a difference between a numerical value indicated on a key top (a symbol icon) and a numerical value authenticated in the PIN code authentication processing. As shown in Fig, 22, for example, a dot pattern overprinted on a key top (a symbol icon) 0 includes a code value signifying "0-3." This code value indicates that the number indicated on a key top (a symbol icon) is 0 and the number authenticated in the PIN code authorization processing is 3. The same manner applies for other numbers.

Fig. 23 features a conversion table included in an ID portion of a card. When a user clicks the ID portion, ID + conversion table is activated. Next, when the number set as a PIN code is clicked, the central processing unit of ATM converts the numerical value sent into a numerical value set in the conversion table. For example, when a key top (a symbol icon) 1 is clicked, the numerical value is converted into 8, when 3, 1.

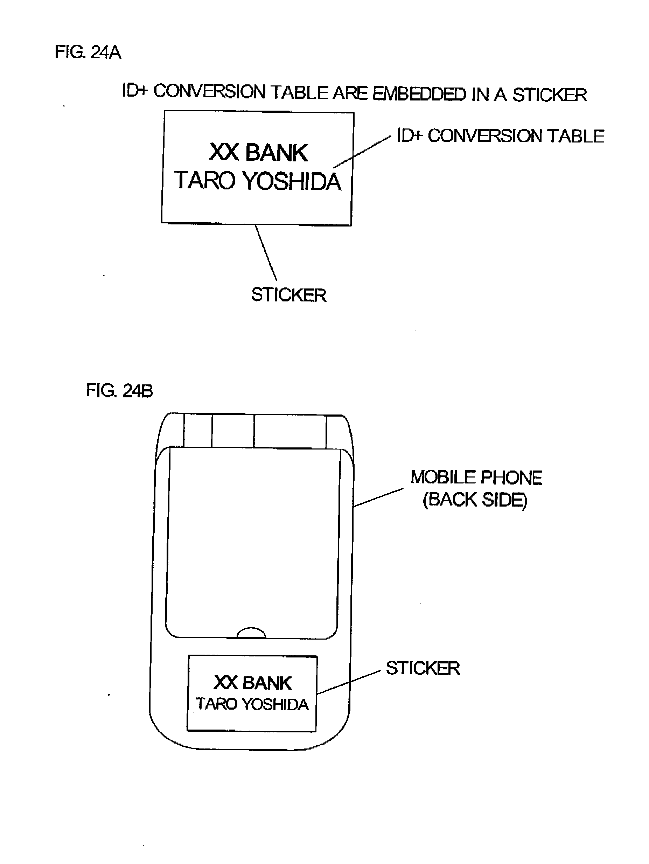

Figs. 24A and 24B are diagrams illustrating an embodiment where an ID portion is configured separate from a card for inputting a PIN number.

As shown in Fig. 24A, an ID portion where a bank name and user name are written is formed in a sticker shape. On the ID portion, a dot pattern including a user ID and a conversion table is overprinted. A user uses the ID portion by attaching this on a mobile phone, etc. as shown in Fig. 24B.

In this way, two types of media are needed for inputting a PIN code. Therefore, even if either of them falls into a third party's hand such as through a theft, the third party cannot input the PIN code correctly, and cannot perform a monetary transaction, etc. Therefore, having the ID portion and the number portion separately provides higher security. Also, using a sticker for the ID portion enables the user to take along the ID portion by attaching the same on a mobile phone, etc. preventing it from loss. Of course, the ID portion is not limited to such a sticker and this may be an ordinary card.

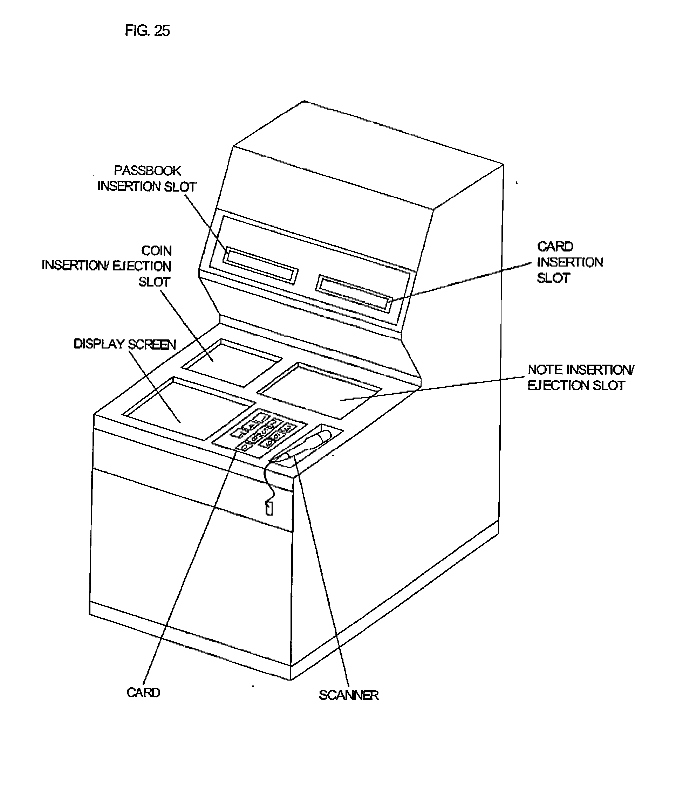

Further, in this embodiment, a card for inputting a PIN code can be provided on an ATM, as shown in Fig. 25. The card for inputting the PIN code is laminated and attached on a platform of an ATM.

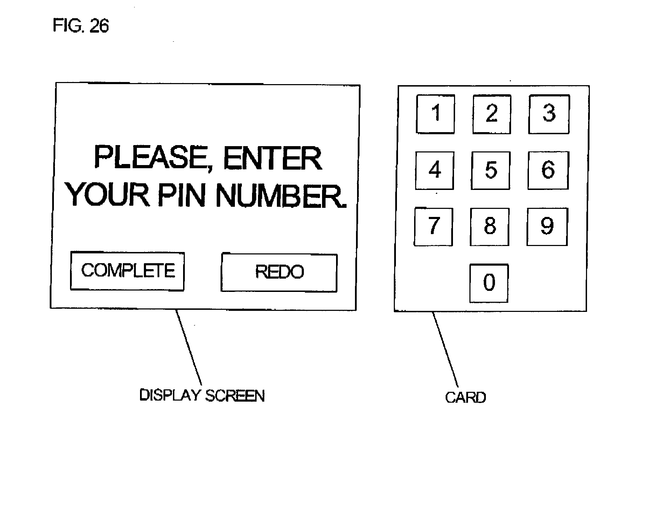

Fig. 26 shows an example of a display screen of the embodiment of Fig. 25, displayed when a user is inputting a PIN code.

When a user clicks an ID sticker, the central processing unit of the ATM performs an ID authorization. Then, a message "Please, enter your PIN number." is displayed at the center of the display screen, and "Complete" at the lower left portion and "Redo" at the lower right portion are displayed. The user clicks a key top (a symbol icon) of a card attached at right of the display screen with a scanner to enter a PIN number.

It should be noted that if the card for inputting a PIN code is configured as laminated on the platform of the ATM, the display screen need not be provided.

Alternatively, the configuration can be like that, instead of laminating the card for inputting a PIN code on an ATM, a numerical value is displayed on a display screen when a user clicks an ID sticker, then the user touches this numerical value to input the PIN code.

Additionally to the above description, an icon touched by a scanner may be a number or a graphic as long as the icon can be distinguished from others. Also, the order for inputting the PIN code, that is, the order for touching these icons, does not have to be restricted.

For example, 100 icons expressed with illustrations of an orange, an apple, a bunch of grapes and the like are arranged. A user determines four icons to touch from them. The user also determines to rotate the scanner right approximately 30 degrees when touching an orange icon, and rotate left approximately 10 degrees when touching an apple icon. When touching a plurality of icons, the order does not have to be determined. In other words, an orange icon does not have to be touched after an apple icon; the configuration can be like touching an apple icon first, following a grape icon, and at last an orange icon.

However, the angle for touching each icon should always be consistent. For example, in the above example, the scanner should always be rotated right approximately 30 degrees when touching an orange icon.

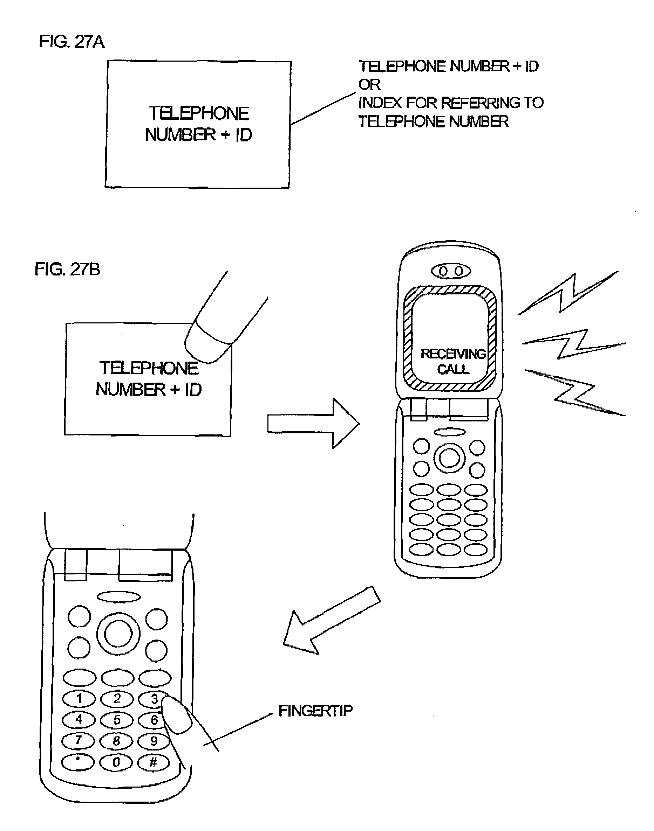

Figs. 27A and 27B are diagrams illustrating a PIN code input system using a mobile terminal (a device with a communication function, such as a mobile phone).

This embodiment comprises a predetermined printing surface on a card for authentication, a sticker, or a mobile terminal (hereinafter, referred to as "mobile terminal with a dot pattern"), a scanner for reading a dot pattern printed on this printing surface, a control device (e.g., a personal computer) for decoding a code value read with the scanner and calling a predetermined mobile terminal (hereinafter, referred to as "mobile terminal for receiving an incoming call"),

The mobile terminal with a dot pattern and the mobile terminal for receiving an incoming call may be the same mobile terminal or different mobile terminals.

On the predetermined printing surface of a card for authentication, a sticker, or a mobile terminal with a dot pattern, a predetermined mobile terminal number and ID, or an address of an index for referring to the mobile phone number are encoded and printed as a dot pattern. The control device, by optically reading a dot pattern of the predetermined printing surface of a card for authentication, a sticker, or a mobile terminal with a dot pattern, decodes the dot pattern into a mobile terminal number and ID, or an address of index for referring to the mobile terminal number, calls or sends out a mail to a mobile terminal for receiving an incoming call, and accepts a PIN code input from a mobile terminal for receiving an incoming call. Calling the mobile terminal for receiving an incoming call can be performed through a center server connected to the control device via a network.

Moreover, as described above, the scanner does not have to be connected to the mobile terminal for receiving an incoming call. For example, in order to make a user at a shopping center purchase a product from an Internet shop when the product was out of stock at the shopping center (not to give away a sales opportunity), merely a scanner equipped with a control device at the shopping center satisfies the requirement, which saves costs for a system introduction.

Of course, if the control device also works as a mobile terminal with a dot pattern, all mobile terminals with dot patterns may be configured to be connected with scanners.

With the PIN code input system of the present invention, for example, a user can perform Internet-shopping using a wide screen of a personal computer and perform only settlement using this PIN code input system to enhance security, or can perform shopping and settlement together for convenience, or can remove the settlement function from a shop system of an Internet shop to simplify the shop system.

Moreover, if a user uses a mobile terminal for receiving an incoming call which incorporates a wallet function, settlement can be complete using electronic money of the mobile terminal for receiving an incoming call. As such, user's convenience at settlement can be further improved, compared with other settlement methods such as a credit card or cash on delivery.

In the present invention, as shown in Fig. 27A, the card for authentication has only an ID portion. The ID portion is overprinted with a dot pattern including a user's telephone number and an ID or a dot pattern including an index for referring to the telephone number. Here, the medium having only the ID portion may be a sticker. Further, the same overprinting as the card for authentication may be made on a surface of a mobile phone with a dot pattern, or a dot pattern may be configured as holes instead of being overprinted. Of course, a mobile terminal with a dot pattern may be realized by attaching the sticker.

Fig. 27B is a diagram illustrating a procedure for inputting a PIN code. A user first clicks an ID portion using a scanner connected to a personal computer. As a result, the dot pattern is read by the scanner, and the personal computer or the center server connected to the personal computer via a network performs telephone call processing so that a user's mobile phone for receiving an incoming call receives a call. Alternatively, e-mail may be sent to the mobile phone for receiving an incoming call. When the call is received by the mobile phone for receiving an incoming call, PIN code input is enabled. Then, the user inputs a PIN code using a key top (a symbol icon) of the mobile phone for receiving an incoming call. Accordingly, the control device or the server center can authenticate the user.

As such, both a mobile phone for receiving an incoming call and a card for authentication or a sticker on which a dot pattern is printed or an ID on a predetermined printing surface of a mobile terminal with a dot pattern are needed. Therefore, even if either one of them falls in the hands of a third party through a theft, etc., the third party cannot obtain a PIN code correctly, thus, cannot perform a monetary transaction, etc. Therefore, requiring having both a mobile phone for receiving an incoming call and an ID can provide higher security.

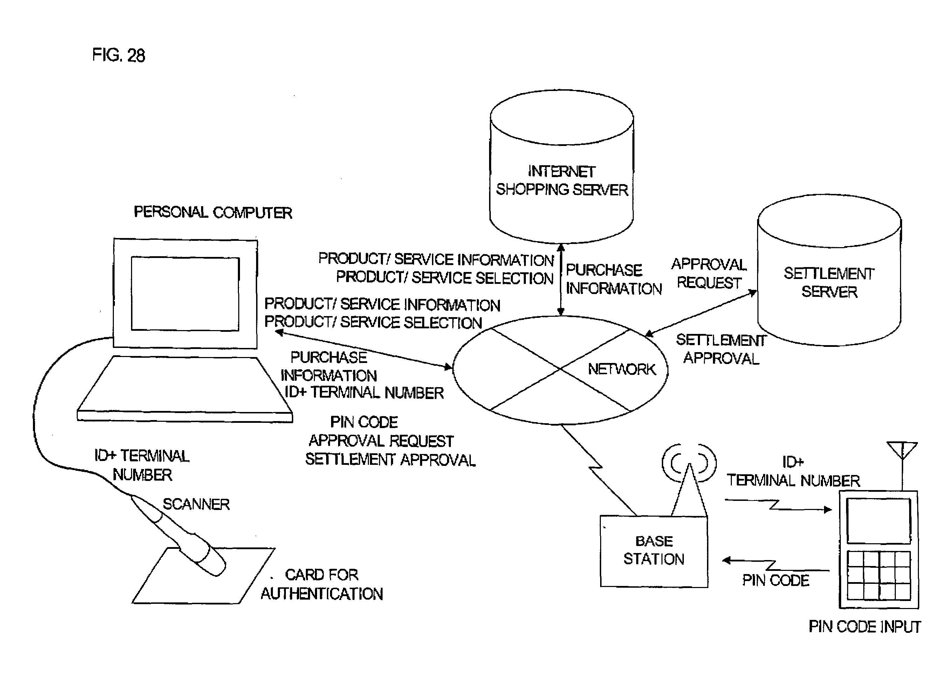

In Fig. 28, an Internet shopping settlement system is shown as an application example of a PIN code input system of the present invention. Operation thereof is described below using Fig. 28.

First, a user accesses an Internet shopping server from a personal computer and browses information relating to a product or a service provided at an Internet shop in the Internet shopping server.

Next, the user selects what product or service to buy, how many of them to buy, and what the payment method and delivery method should be at the Internet shop.

Then, the Internet shopping server collects purchase information including an identifier (ID) for identifying a selected product or service, quantity of a product or service to be purchased, and the price, then transmits the information to the personal computer as a control device via, for example, an e-mail.

Next, the personal computer performs a user authentication through a mobile terminal for receiving an incoming call, as described above. Specifically, the user, on the personal computer, uses a scanner to scan and read out the dot pattern including an ID on a card for authentication and a terminal number. The personal computer sends out the ID and the terminal number to the mobile terminal for receiving an incoming call. The user inputs a PIN number on the mobile terminal for receiving an incoming call so that the mobile terminal for receiving an incoming call replies the PIN number to the personal computer.

The card for authentication may store, instead of directly storing a telephone number of a mobile terminal, an address of index for referring to the telephone number.

Alternatively, an e-mail address may be used to send an e-mail, instead of a telephone number to call the mobile terminal for receiving an incoming call from the control device. Provided, however, that a system to confirm the authenticity of the mobile terminal for receiving an incoming call is needed to prevent from transferring of e-mail to an illicit mobile terminal and performing illicit personal authentication at the transferred destination.

Further, the purchase information may be sent together when sending the ID and the terminal number from a personal computer to a mobile terminal for receiving an incoming call. With such a configuration, for example, when the user performs multiple purchases, the user can identify each purchase and input a PIN code upon entering a PIN code.

Next, the personal computer requests the settlement server for a settlement approval. Moreover, the configuration may be that the mobile terminal for receiving an incoming call requests for a settlement approval to the settlement server and completes the settlement upon approval from the settlement server, although the configuration is different from the above described mobile terminal for receiving an incoming call which is only inputting a PIN code.

Next, the settlement server performs a settlement approval and notifies the result to the personal computer after the settlement processing.

As described, processing from purchase of a product or a service through settlement thereof in an Internet shopping is complete.

In the above configuration, since purchase processing and settlement processing of a product or a service are separate, after purchase processing is performed at a plurality of Internet shops, settlement processing, which is entering a PIN code and onward, can be collectively performed later on a mobile terminal for receiving an incoming call. A user authentication may be performed only once in a settlement processing, which can save steps for entering a PIN code for each settlement processing of purchases at a plurality of Internet shops.

Although Fig. 28 shows that a personal computer accessing an Internet shopping server and the control device are identical, the personal computer or a mobile terminal accessing the Internet shopping server and the control device may be different.

Also, Fig. 28 shows that the settlement server and a mobile terminal for receiving an incoming call are different. However, if the mobile terminal for receiving an incoming call can handle electronic money, the settlement server and the mobile terminal for receiving an incoming call can be the same device.

For example, if a scanner is connected to a mobile terminal for receiving an incoming call which supports electronic money, a user can access the Internet shopping server through this mobile terminal for receiving an incoming call, selects a product or a service to be purchased, performs a user authentication with this mobile terminal for receiving an incoming call to execute a settlement approval. Accordingly, a high security Internet shopping settlement system can be realized with such a mobile terminal for receiving an incoming call, a card for authentication, and a simple Internet shopping server which has no settlement function.

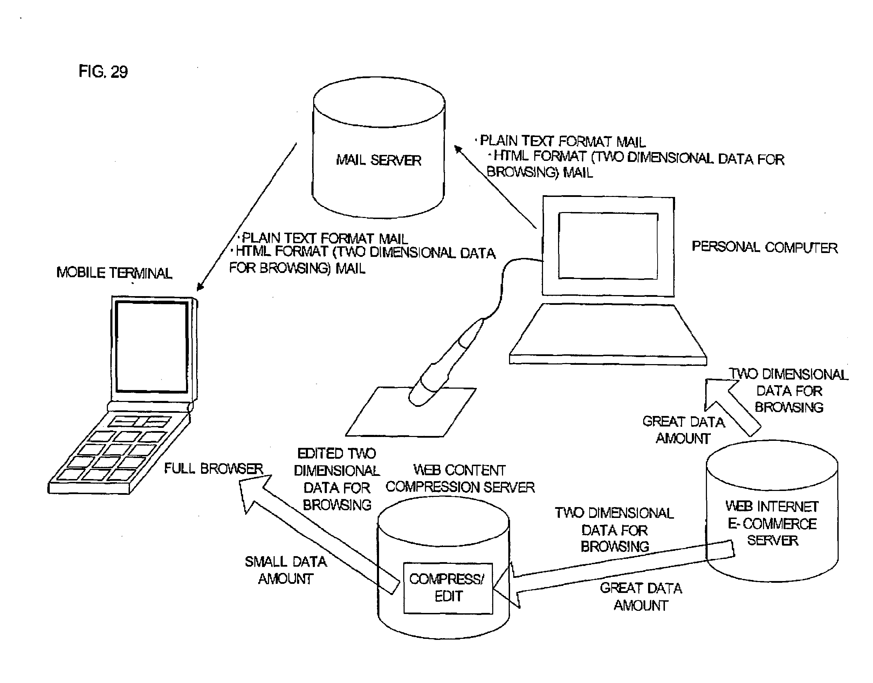

Fig. 29 shows an example of selective use of a personal computer and a mobile terminal.

In this example, a list of products or services of an e-commerce server (an Internet shop) which has been browsed from a personal computer and selected for purchase is sent as text data or HTML data to a mobile terminal which performs a settlement processing via an e-mail. If it is HTML data, images, etc. can be included, thereby increasing information amount compared to text data, which allows information of products or services browsed from a personal computer can be sent to the mobile terminal almost as is.

However, there is a problem that, when you want to browse relative information on products or services sent from a personal computer on a mobile terminal, data of Web content (two-dimensional format data for browsing) in an e-commerce server, which is assumed to having been browsed from personal computers, is too large as is, to browse from a mobile terminal even with a full browser.

To solve this problem, a Web content compression server is disposed between an e-commerce server and a mobile terminal in order to send compressed or edited Web content to the mobile terminal so that a user can browse the content even with the small screen of the mobile terminal.

Also, to make content, which has been browsed from a personal computer, be also browsed from a mobile phone, for example, Web content which has been bookmarked in the personal computer may be sent to a mobile terminal via an e-mail, etc. For data synchronization between the personal computer and the mobile terminal, a system such as a widget, a gadget, or a desktop tool may be used.

Using such a system, information on products or services which has been browsed on a personal computer can be stocked in the same manner just as bookmarking, then this information can be checked at one time from a mobile terminal whenever available to change the selection of products or services.

High definition movies are increasingly common for mobile terminals. It is thus useful to send content such as URLs of products or services selected on a personal computer to a mobile phone which can be connected to a large screen TV.

For example, It is possible for a user to select, at home at night, candidates for purchase from products or services at various Internet shops, send the candidates to a mobile terminal for receiving an incoming call, then, next morning, further examine products and services to actually purchase from the candidates using the mobile terminal for receiving an incoming call.

Although, an ID portion of a card for authentication is clicked with a scanner in this embodiment, the present invention is not limited to this. The touch panel chassis illustrated in Figs. 15A and 15B may also be used to cause a dot pattern to be read by placing a card for authentication on the touch panel surface. Alternatively, both an ID portion and a number portion may be provided on a card for authorization so that a PIN code entry can be performed on the number portion of the card.

It should be noted that the functions of the scanner in the above-described embodiments and examples may be realized by a camera incorporated in a mobile terminal (including a mobile phone).

Also, the scanner in the above-described embodiments and examples may be implemented as a separate scanner connected to another device by wired or wireless means, or as part of a remote controller used with a TV receiver and a printed material such as a TV guide book on which dot patterns are printed, or as part of a mouse.

<Application to Catalogue Sales, etc.>

For example, when a guide book for cable TV, a mail order catalogue or the like, on which dot patterns are overprinted with product and service information, is used with a TV or personal computer with a scanner to perform purchase processing, if a card for authentication is prepared at hand, a user can perform purchase processing and personal authentication processing under a consistent operational concept of "touching with a scanner." Therefore, even users unfamiliar to a personal authentication operation, such as elderly people, can easily understand the operational method, and perform shopping with an enhanced security.

In such case, as described above, viewing quality can be improved by sending the product and service information selected by touching with the scanner to a mobile terminal connectable to a large screen TV.

Industrial Applicability

The present invention may be applied to security technologies which use a card, a sticker, or a mobile phone.

**Claims**

1. A PIN code input method for performing authentication of a PIN code defined by dot patterns superimposed on identifiable symbol icons printed or displayed on a medium surface, wherein each dot pattern signifies a coordinate value or/and a code value and orientation of the particular dot pattern, and wherein the medium surface includes a plurality of different dot patterns each having an extractable coordinate value or/and code value, the PIN code input method comprising the steps of:

   optically imaging said dot patterns on the medium surface with a scanner configured to retrieve a captured image for each dot pattern;
   resolving, using a processing unit of the scanner, information dots from the captured images and decoding each extracted information dot to extract a corresponding coordinate value or/and the code value for each information dot;
   the method **characterized by**:

   at the processing unit of the scanner and during the step of optically imaging dot patterns, calculating for each imaged dot pattern an angular orientation of the scanner relative to an imaging axis perpendicular to the medium's surface;
   at the processing unit of the scanner, generating a PIN code by combining the angular orientation of each imaged dot pattern with the correspondingly extracted coordinate value or/and the code value;
   sending said generated PIN code to an accounting system;
   authenticating the generated PIN code at the accounting system by judging whether the generated PIN code was input correctly.

2. The PIN code input method according to claim 1, **characterized in that**, when a plurality pieces of the code information are input, the information processing device recognizes, as the input code information, the combination of the dot code and the orientation of the scanner as well as an order in which the code information are input.

3. The PIN code input method according to either claim 1 or 2, **characterized in that** the scanner is implemented as a mobile phone camera, a remote controller equipped with a scanner, or a mouse equipped with a scanner.

4. The PIN code input method according to any preceding claim, wherein each dot pattern includes a key dot and a plurality of grid point dots and wherein the step of calculating the angular orientation determines an angular displacement with reference to the imaging axis as a center based on a position relation between the key dot and grid point dots.

5. The PIN code input method according to any preceding claim, wherein dot patterns are superimposed on distinct identifiable symbols and each dot pattern has a different coordinate value or/and code value for each of the plurality of symbol icons on which the dot pattern is superimposed.

**Patentansprüche**

1. PIN-Code-Eingabeverfahren zur Durchführung einer Authentifizierung eines PIN-Codes, der durch überlagerte Punktmuster auf identifizierbaren Symbolpiktogrammen gebildet ist, welche auf einer Mediumoberfläche gedruckt oder angezeigt werden, wobei jedes Punktmuster einen Koordinatenwert und/oder einen Codewert und eine Orientierung des speziellen Punktmusters bedeutet, und wobei die Mediumoberfläche eine Vielzahl von verschiedenen Punktmustern enthält, die jeweils einen extrahierbaren Koordinatenwert und/oder Codewert besitzen, wobei das PIN-Code-Eingabeverfahren die folgenden Schritte aufweist:

- optisches Abbilden der Punktmuster auf der Mediumoberfläche mit einem Scanner, der dazu ausgebildet ist, ein erfasstes Bild für jedes Punktmuster wiederzugewinnen;
- Auflösen, unter Verwendung einer Prozesseinheit des Scanners, von Informationspunkten aus den erfassten Bildern und Decodieren des jeweiligen extrahierten Informationspunktes, um einen entsprechenden Koordinatenwert und/oder Codewert für jeden Informationspunkt zu extrahieren;

wobei das Verfahren **gekennzeichnet ist durch**

- Berechnen für jedes abgebildete Punktmuster, in der Prozesseinheit des Scanners und während des Schrittes der optischen Abbildung von Punktmustern, einer Winkelorientierung des Scanners relativ zu einer Abbildungsachse senkrecht zu der Mediumoberfläche;
- Erzeugen, in der Prozesseinheit des Scanners, eines PIN-Codes durch Kombinieren der Winkelorientierung von jedem abgebildeten Punktmuster mit dem entsprechend extrahierten Koordinatenwert und/oder Codewert;
- Senden des erzeugten PIN-Codes an ein Buchungssystem;
- Authentifizieren des erzeugten PIN-Codes in dem Buchungssystem **durch** eine Beurteilung, ob der erzeugte PIN-Code korrekt eingegeben war.

2. PIN-Code-Eingabeverfahren nach Anspruch 1,
   **dadurch gekennzeichnet,**
   **dass** dann, wenn eine Vielzahl von Teilen der Codeinformation eingegeben worden ist, die Informations-Prozesseinheit die Eingabecodeinformation als Kombination des Punktcodes und der Orientierung des Scanners sowie als Reihenfolge erkennt, in der die Codeinformation eingegeben wird.

3. PIN-Code-Eingabeverfahren nach einem der Ansprüche 1 oder 2,
   **dadurch gekennzeichnet,**
   **dass** der Scanner als Mobiltelefon-Kamera, als eine mit einem Scanner ausgerüstete Fernsteuerung oder als eine mit einem Scanner ausgerüstete Maus implementiert ist.

4. PIN-Code-Eingabeverfahren nach einem der vorhergehenden Ansprüche, wobei jedes Punktmuster einen Schlüsselpunkt sowie eine Vielzahl von Rasterpunkten aufweist,
   und wobei der Schritt der Berechnung der Winkelorientierung eine Winkelverlagerung bezüglich der Abbildungsachse als Zentrum bestimmt, und zwar auf der Basis einer Positionsrelation zwischen dem Schlüsselpunkt und den Rasterpunkten.

5. PIN-Code-Eingabeverfahren nach einem der vorhergehenden Ansprüche, wobei die Punktmuster auf typischen identifizierbaren Symbolen überlagert sind und jedes Punktmuster einen anderen Koordinatenwert und/ oder Codewert für jeden aus der Vielzahl von Symbolpiktogrammen aufweist, auf denen das Punktmuster überlagert ist.

**Revendications**

1. Méthode d'entrée de code NIP pour l'authentification d'un code NIP défini par des motifs de points superposés sur des icones de symboles identifiables imprimés ou affichés sur une surface de média, dans laquelle chaque motif de points signifie une valeur de coordonnée ou/et une valeur de code et une orientation du motif de points particulier, et dans laquelle la surface de média comporte une pluralité de motifs de points différents, chacun présentant une valeur extractible de coordonnée ou/et de valeur de code, la méthode d'entrée de code NIP comprenant les étapes :

   - de numérisation optique desdits motifs de points sur la surface de média par le biais d'une unité de numérisation configurée pour récupérer une image captée pour chaque motif de points ;
   - de résolution, par le biais d'une unité de traitement de l'unité de numérisation, les points d'information à partir des images captées et de décodage de chaque point d'information extrait, afin d'extraire une valeur de coordonnée correspondante ou/et la valeur de code pour chaque point d'information ;

   la méthode étant **caractérisée par** :

   - au niveau de l'unité de traitement de l'unité de numérisation et pendant l'étape de numérisation optique des motifs de points, le calcul pour chaque motif de point numérisé, d'une orientation angulaire de l'unité de numérisation par rapport à un axe de numérisation perpendiculaire à la surface de média ;
   - au niveau de l'unité de traitement de l'unité de numérisation, la génération d'un code NIP en combinant l'orientation angulaire de chaque point numérisé avec la valeur correspondante de coordonnée extraite ou/et la valeur de code ;
   - l'envoi dudit code NIP généré à un système de comptabilité ;
   - l'authentification du code NIP généré au niveau du système de comptabilité en déterminant si le code NIP généré a été entré correctement.

2. Méthode d'entrée de code NIP selon la revendication 1, **caractérisée en ce que**, lorsqu'une pluralité de morceaux d'informations de code sont entrées, le dispositif de traitement des informations reconnaît, en tant qu'information de code d'entrée, la combinaison du code à points et l'orientation de l'unité de numérisation ainsi qu'un ordre selon lequel les informations de code sont entrées.

3. Méthode d'entrée de code NIP selon la revendication 1, ou la revendication 2, **caractérisée en ce que** l'unité de numérisation est implémentée sous forme d'un appareil photonumérique de téléphone mobile, d'une télécommande équipée d'une unité de numérisation, ou d'une souris équipée d'une unité de numérisation.

4. Méthode d'entrée de code NIP selon l'une quelconque des revendications précédentes, dans laquelle chaque motif de points comporte un point à clé et une pluralité de points de grille et dans laquelle l'étape de calcul de l'orientation angulaire détermine un déplacement angulaire par rapport à l'axe de numérisation en tant que centre basé sur un rapport de position entre le point à clé et les points de grille.

5. Méthode d'entrée de code NIP selon l'une quelconque des revendications précédentes, dans laquelle les motifs de points sont superposés sur des symboles distincts identifiables et chaque motif de point présente une valeur de coordonnée différente ou/et valeur de code différente pour chacune de la pluralité d'icones de symboles sur lesquels le motif de points est superposé.

FIG. 1

ATM

PASSBOOK
INSERTION SLOT

COIN
INSERTION/ EJECTION
SLOT

DISPLAY SCREEN

NOTE
INSERTION/ EJECTION
SLOT

CARD          CARD PLACEMENT          SCANNER          SCANNER
                  PORTION                                        PLACEMENT
                                                                    PORTION

FIG. 2

ATM

SCANNER

PASSBOOK HANDLING UNIT

INPUT DISPLAY UNIT (TOUCH PANEL)

COIN HANDLING UNIT

CENTRAL PROCESSING UNIT (STORAGE UNIT)

NOTE HANDLING UNIT

COIN STORING UNIT

NOTE STORING UNIT

CLOCK UNIT

COMMUNICATION CONTROL UNIT

TO ACCOUNTING SYSTEM

FIG. 3

CARD

ID PORTION

**XX BANK
TARO YOSHIDA**

NUMBER
PORTION

| 0 | 1 | 2 | 3 | 4 |
| 5 | 6 | 7 | 8 | 9 |

FIG. 4

FIG. 5A

FIG. 5B

FIG. 6A

CODE VALUE

PARITY CHECK

FIG. 6B

| | CODE VALUE | X COORDINATE | Y COORDINATE |
|---|---|---|---|

PARITY CHECK

FIG. 7

FIG. 8A

00100001

FIG. 8B

00100001

FIG. 8C

00100001

FIG. 9A

| $I_3$ | $I_4$ | $I_5$ |
|---|---|---|
| $I_2$ | $I_1$ | $I_6$ |

2× 3

FIG. 9B

| $I_3$ | $I_4$ | $I_5$ |
|---|---|---|
| $I_2$ | $I_1$ | $I_6$ |
| $I_9$ | $I_8$ | $I_7$ |

3× 3

FIG. 9C

| $I_5$ | $I_6$ | $I_7$ |
|---|---|---|
| $I_4$ | $I_1$ | $I_8$ |
| $I_3$ | $I_2$ | $I_9$ |
| $I_{12}$ | $I_{11}$ | $I_{10}$ |

3× 4

FIG. 9D

| $I_{36}$ | $I_{17}$ | $I_{18}$ | $I_{19}$ | $I_{20}$ | $I_{21}$ |
|---|---|---|---|---|---|
| $I_{35}$ | $I_{16}$ | $I_5$ | $I_6$ | $I_7$ | $I_{22}$ |
| $I_{34}$ | $I_{15}$ | $I_4$ | $I_1$ | $I_8$ | $I_{23}$ |
| $I_{33}$ | $I_{14}$ | $I_3$ | $I_2$ | $I_9$ | $I_{24}$ |
| $I_{32}$ | $I_{13}$ | $I_{12}$ | $I_{11}$ | $I_{10}$ | $I_{25}$ |
| $I_{31}$ | $I_{30}$ | $I_{29}$ | $I_{28}$ | $I_{27}$ | $I_{26}$ |

6× 6

FIG. 10

FIG. 11

| | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|
| $C_0$ | $C_1$ | $C_2$ | $C_3$ | $C_4$ | $C_5$ | $C_6$ | $C_7$ | $C_8$ | $C_9$ | $C_{10}$ | $C_{11}$ | $C_{12}$ | $C_{13}$ | $C_{14}$ | $C_{15}$ | $C_{16}$ | $C_{17}$ | $C_{18}$ | $C_{19}$ | $C_{20}$ | $C_{21}$ | $C_{22}$ | $C_{23}$ | $C_{24}$ | $C_{25}$ | $C_{26}$ | $C_{27}$ | $C_{28}$ | $C_{29}$ | $C_{30}$ | $C_{31}$ |
| CODE VALUE | | | | | | | | | | | | | | | | | | | | | | | | | | | | | | | PARITY |

FIG. 12

SCANNER

ORIENTATION OF
SCANNER

KEYTOP

FIG. 13A

ORIENTATION OF
SCANNER

ORIENTATION OF
DOT PATTERN

KEY DOT

KEY DOT

FIG. 13B

ORIENTATION OF DOT PATTERN

- 90°

ORIENTATION OF
SCANNER

FIG. 13C

ORIENTATION OF DOT PATTERN

+ 90°

ORIENTATION OF
SCANNER

FIG. 14

**FIG. 15A**

TOUCH PANEL
SURFACE

R - LED

TOUCH PANEL      CARD
CHASSIS

READING OPENING

CAMERA

**FIG. 15B**

PIN CODE
AUTHENTICATION
SERVER

NETWORK

COMPUTER SYSTEM — TOUCH PANEL
CHASSIS

FIG. 16

LIGHT RECEIVING ELEMENTS
(RECEIVING PORTION)

FINGERTIP

LIGHT EMITTING ELEMENTS
(INFRARED IRRADIATION ELEMENT)

FIG. 17A

TOUCH PANEL SURFACE

DIRECTION OF SENSOR
(Y AXIS)

$\theta$

y

x

TOUCH LOCATION
Xt, Yt (TOUCH PANEL
COORDINATE SYSTEM)
xt, yt (CARD COORDINATE
SYSTEM)

CENTER OF IMAGING AREA
(CENTER OF CAMERA)

CARD CODE
CENTER OF IMAGING AREA
xs,ys (CARD COORDINATE
SYSTEM)

CENTER OF IMAGING AREA
XsYs (TOUCH PANEL
COORDINATE SYSTEM)

Y

X

FIG. 17B

COORDINATES AT TOUCH PANEL LOCATION
IN CARD COORDINATE SYSTEM

$$\begin{Bmatrix} x_t \\ y_t \end{Bmatrix} = \begin{Bmatrix} x_s \\ y_s \end{Bmatrix} + \begin{Bmatrix} \cos\theta & \sin\theta \\ -\sin\theta & \cos\theta \end{Bmatrix} \begin{Bmatrix} X_t - X_s \\ Y_t - Y_s \end{Bmatrix}$$

FIG. 18A

FIG. 18B

FIG. 18C

FIG. 19

FIG. 20A

UP/ DOWN/ LEFT/ RIGHT
FOUR DIRECTIONS

FIG. 20B

FOUR DIAGONAL
DIRECTIONS

FIG. 20C

EIGHT DIRECTIONS

FIG. 21A

FOUR CODE REGIONS EXIST IN KEYTOP

| CODE 3-4 | CODE 3-1 |
|----------|----------|
| CODE 3-3 | CODE 3-2 |

FIG. 21B

XY COORDINATES INCLUDED IN KEYTOP

CODE 3

Y

X

FIG. 21C

UPPER LEFT

3

LOWER RIGHT

6

LOWER LEFT

1

UPPER RIGHT

4

FIG. 22

| | 0 | 1 | 2 | 3 | 4 |
|---|---|---|---|---|---|
| CODES | 0-3 | 1-8 | 2-0 | 3-1 | 4-5 |
| NUMBERS AUTHENTICATED | 3 | 8 | 0 | 1 | 5 |

| | 5 | 6 | 7 | 8 | 9 |
|---|---|---|---|---|---|
| CODES | 5-2 | 6-4 | 7-9 | 8-7 | 9-6 |
| NUMBERS AUTHENTICATED | 2 | 4 | 9 | 7 | 6 |

FIG. 23

ID+ CONVERSION TABLE

XX BANK
TARO YOSHIDA

| 0 | 1 | 2 | 3 | 4 |
| 5 | 6 | 7 | 8 | 9 |

ID+ CONVERSION TABLE

| D | 3 | 8 | 0 | 1 | 5 | 2 | 4 | 9 | 7 | 6 |
|---|---|---|---|---|---|---|---|---|---|---|

CONVERSION TABLE

FIG. 24A

ID+ CONVERSION TABLE ARE EMBEDDED IN A STICKER

XX BANK
TARO YOSHIDA

ID+ CONVERSION TABLE

STICKER

FIG. 24B

MOBILE PHONE
(BACK SIDE)

XX BANK
TARO YOSHIDA

STICKER

FIG. 25

PASSBOOK
INSERTION SLOT

COIN
INSERTION/ EJECTION
SLOT

CARD
INSERTION
SLOT

DISPLAY SCREEN

NOTE INSERTION/
EJECTION SLOT

CARD

SCANNER

FIG. 26

PLEASE, ENTER
YOUR PIN NUMBER.

| COMPLETE | | REDO |

| 1 | 2 | 3 |
| 4 | 5 | 6 |
| 7 | 8 | 9 |
| | 0 | |

DISPLAY SCREEN

CARD

FIG. 27A

TELEPHONE
NUMBER + ID

TELEPHONE NUMBER + ID
OR
INDEX FOR REFERRING TO
TELEPHONE NUMBER

FIG. 27B

TELEPHONE
NUMBER + ID

RECEIVING
CALL

FINGERTIP

FIG. 28

PERSONAL COMPUTER

INTERNET
SHOPPING SERVER

SETTLEMENT
SERVER

PRODUCT/ SERVICE INFORMATION
PRODUCT/ SERVICE SELECTION

PURCHASE
INFORMATION

APPROVAL
REQUEST

PRODUCT/ SERVICE INFORMATION
PRODUCT/ SERVICE SELECTION

SETTLEMENT
APPROVAL

PURCHASE
INFORMATION
ID+ TERMINAL NUMBER

NETWORK

PIN CODE
APPROVAL REQUEST
SETTLEMENT APPROVAL

ID+ TERMINAL
NUMBER

ID+
TERMINAL NUMBER

SCANNER

BASE
STATION

PIN CODE

CARD FOR
AUTHENTICATION

PIN CODE INPUT

EP 2 110 773 B1

FIG. 29

MAIL SERVER

· PLAIN TEXT FORMAT MAIL
· HTML FORMAT (TWO DIMENSIONAL DATA FOR BROWSING) MAIL

PERSONAL COMPUTER

· PLAIN TEXT FORMAT MAIL
· HTML FORMAT (TWO DIMENSIONAL DATA FOR BROWSING) MAIL

MOBILE TERMINAL

TWO DIMENSIONAL DATA FOR BROWSING

GREAT DATA AMOUNT

FULL BROWSER

EDITED TWO DIMENSIONAL DATA FOR BROWSING

WEB CONTENT COMPRESSION SERVER

WEB INTERNET E-COMMERCE SERVER

TWO DIMENSIONAL DATA FOR BROWSING

SMALL DATA AMOUNT

COMPRESS/ EDIT

GREAT DATA AMOUNT

EP 2 110 773 B1

41

## REFERENCES CITED IN THE DESCRIPTION

### Patent documents cited in the description

- JP 2005141626 A
- JP 2006107085 A
- JP 2005267624 A